# EUROPÄISCHE PATENTANMELDUNG

(11) **EP 4 187 556 A1**
(43) Veröffentlichungstag der Anmeldung: **31.05.2023**
(21) Anmeldenummer: 21211024.1
(22) Anmeldetag: 29.11.2021
(51) Int. Cl.: G21K 1/00, G06N 10/40

(54) **ZELLE ZUR DURCHFÜHRUNG QUANTENOPTISCHER MESSUNGEN**

(71) Anmelder: Universität Stuttgart, 70174 Stuttgart (DE)
(72) Erfinder: Meinert, Florian, 71083 Herrenberg (DE); Ilzhöfer, Philipp, 70499 Stuttgart (DE); Hölzl, Christian, 70199 Stuttgart (DE); Pfau, Tilman, 71069 Sindelfingen / Darmsheim (DE)
(74) Vertreter: Altmann Stößel Dick Patentanwälte PartG mbB

(57) **Zusammenfassung**

Es wird eine Zelle (110) zur Durchführung quantenoptischer Messungen an mindestens einer Atomwolke vorgeschlagen. Die Zelle (110) umfasst eine Kontrolleinheit (114) zur Kontrolle elektrischer Felder am Ort (112) der Atomwolke. Die Kontrolleinheit (114) umfasst:
- mindestens ein Gehäuse (116) mit mindestens einem Innenraum (120) zur Aufnahme der Atomwolke und mit mindestens einer Öffnung (122) zum Einbringen der Atome der Atomwolke in den Innenraum (120); und
- mindestens zwei Elektroden (118),
o wobei die Elektroden (118) unabhängig voneinander mit elektrischen Potenzialen beaufschlagbar sind und eingerichtet sind, um mindestens ein elektrisches Feld in dem Innenraum (120) zu beeinflussen,
o wobei die Elektroden (118) mechanisch mit dem Gehäuse (116) verbunden sind.

Mindestens eine der Elektroden (118) wird zumindest teilweise durch mindestens ein optisches Fenster (130) gebildet, durch welches mindestens ein Lichtstrahl (132) zur Wechselwirkung mit der Atomwolke in den Innenraum (120) einstrahlbar ist. Das optische Fenster (130) umfasst mindestens ein transparentes Substrat (134) und mindestens eine transparente elektrisch leitfähige Beschichtung (136) des Substrats (134). Weiterhin werden ein System (182) zur Durchführung quantenoptischer Messungen an mindestens einer Atomwolke, ein Quantencomputer (204) und ein Verfahren zur Durchführung quantenoptischer Messungen an mindestens einer Atomwolke vorgeschlagen.

## Beschreibung

### Technisches Gebiet

Die vorliegende Erfindung betrifft eine Zelle zur Durchführung quantenoptischer Messungen an mindestens einer Atomwolke, ein System zur Durchfuhrung quantenoptischer Messungen an mindestens einer Atomwolke, einen Quantencomputer sowie ein Verfahren zur Durchführung quantenoptischer Messungen an mindestens einer Atomwolke. Derartige Vorrichtungen und Verfahren werden beispielsweise auf dem Gebiet der Quantencomputer, der Quantensimulationen, in der Quantensensorik oder allgemein im Bereich der Quantenoptik eingesetzt. Jedoch sind auch andere Einsatzgebiete möglich.

### Technischer Hintergrund

Im Bereich des Quantencomputings und der Quantensimulationen ist es üblich Atome, beispielsweise lasergekühlte Atome und insbesondere so genannte Rydberg-Atome, gezielt als individuell adressierbare Quantenbits, auch Qubits genannt, zu präparieren. Dazu arbeiten Quantencomputer oder auch Quantensimulatoren beispielsweise mit Anordnungen aus optischen Pinzetten, wobei Quantenoperationen über Anregungen in Rydberg-Zustände mittels Gatterlasem realisiert werden. Solche Rydberg-Zustände sind jedoch überaus empfindlich auf elektrische Felder und lassen sich durch Anlegen elektrischer Felder sogar gezielt manipulieren.

In A. Browaeys and T. Lahaye, "Many-body physics with individually controlled Rydberg atoms", Nature Physics 16, 132, 2020 werden Systeme aus einzeln kontrollierten neutralen Atomen beschrieben, die miteinander wechselwirken, wenn sie zu Rydberg-Zuständen angeregt werden, welche sich als vielversprechende Plattform insbesondere für die Simulation von Spinsystemen erwiesen haben. Es werden die Techniken vorgestellt, die für die Manipulation von neutralen Atomen zum Zwecke der Quantensimulation erforderlich sind - wie Quantengasmikroskope und Anordnungen von optischen Pinzetten - und es wird erklärt, wie die verschiedenen Arten von Wechselwirkungen zwischen Rydberg-Atomen eine natürliche Abbildung auf verschiedene Quantenspinmodelle ermöglichen. Es werden Errungenschaften bei der Untersuchung der Quantenvielteilchenphysik auf dieser Plattform und einige aktuelle Forschungsrichtungen darüber hinaus diskutiert.

In M. Saffman, "Quantum computing with atomic qubits and Rydberg interactions: progress and challenges", J. Phys. B: At. Mol. Opt. Phys. 49, 202001, 2016 wird ein Überblick über die Quantenberechnung mit neutralen Atom-Qubits gegeben. Nach einem Überblick über architektonische Optionen und Ansätze zur Vorbereitung großer Qubit Anordnungen werden Rydberg-basierte Gatterprotokolle und die Zuverlässigkeit von Zwei- und Multi-Qubit-Wechselwirkungen untersucht. Quantensimulation und Rydberg-Dressing sind Alternativen zum gatterbasierten Quantencomputing für die Erforschung von Quantendynamiken. Es werden die Eigenschaften der Rydberg-Dressing-Wechselwirkung untersucht und ein quantitativer Wert für die Komplexität der kohärenten Dynamik geliefert, auf die mit Rydberg-Dressing zugegriffen werden kann.

In H. Bernien, S. Schwartz, A. Keesling, H. Levine, A. Omran, H. Pichler, S. Choi, A. S. Zibrov, M. Endres and M. V. V. Greiner, "Probing many-body dynamics on a 51-atom quantum simulator", Nature 551, 579, 2017 werden kontrollierbare, kohärente Vielteilchensysteme beschrieben, welche Einblicke in die grundlegenden Eigenschaften der Quantenmaterie gewähren, die Realisierung neuer Quantenphasen ermöglichen und schließlich zu Rechensystemen führen, die die Leistung bestehender, auf klassischen Ansätzen basierender Computer übertreffen. Es wird eine Methode zur Erzeugung kontrollierter Vielteilchen-Quantenmaterie demonstiert, die deterministisch präparierte, rekonfigurierbare Anordnungen von einzeln gefangenen kalten Atomen mit starken, kohärenten Wechselwirkungen kombiniert, die durch Anregung zu Rydberg-Zuständen ermöglicht werden. Es wird ein programmierbares Quantenspinmodell vom Ising-Typ mit durchstimmbaren Wechselwirkungen und Systemgrößen von bis zu 51 Qubits realisiert. Innerhalb dieses Modells werden Phasenübergänge in räumlich geordnete Zustände beobachtet, die verschiedene diskrete Symmetrien brechen. Weiter wird die Präparation dieser Zustände mit hoher Güte verifiziert und die Dynamik über den Phasenübergang in großen Anordnungen von Atomen untersucht. Insbesondere wird eine robuste Vielteilchen-Dynamik beobachtet, die mit anhaltenden Oszillationen der Ordnung nach einem schnellen Quantenquenching korrespondiert, das aus einem plötzlichen Übergang über die Phasengrenze stammt.

In H. Levine, A. Keesling, G. Semeghini, A. Omran, T. T. Wang, S. Ebadi, H. Bernien, M. Greiner, V. Vuletić, H. Pichler and M. D. Lukin, "Parallel Implementation of High-Fidelity Multiqubit Gates with Neutral Atoms", Phys. Rev. Lett. 123, 170503, 2019 wird die Implementierung von universellen Zwei- und Drei-Qubit-Verschränkungsgattern auf neutralen Atom-Qubits beschrieben, die in langlebigen Hyperfein-Grundzuständen kodiert sind. Die Gatter werden durch Anregung zu stark wechselwirkenden Rydberg-Zuständen vermittelt und sind parallel auf mehreren Atomclustern in einer eindimensionalen Anordnung von optischen Pinzetten durchführbar. Insbesondere wird das CZ-Gatter realisiert, das durch ein neuartiges, schnelles Protokoll realisiert wird, das nur eine globale Kopplung von zwei Qubits an Rydberg-Zustände erfordert. Dieser Vorgang wird durch die Vorbereitung von Bell-Zustände mit einer Güte von F ≥ 95,0(2)% und eine Gattergenauigkeit von ≥ 97,4(3)% getestet, gemittelt über fünf Atompaare. Darüber hinaus wird über eine Proof-of-Principle-Implementierung des Drei-Qubit-Toffoli-Gatters berichtet, bei der zwei Kontrollatome gleichzeitig das Verhalten eines Zielatoms einschränken. Diese Experimente zeigen, dass die Schlüsselkomponenten für eine hochgradig zuverlässige Quanteninformationsverarbeitung in einer skalierbaren Plattform mit neutralen Atomen vorhanden sind.

In T. M. Graham, M. Kwon, B. Grinkemeyer, Z. Marra, X. Jiang, M. T. Lichtman, Y. Sun, M. Ebert and M. Saffman, "Rydberg-Mediated Entanglement in a Two-Dimensional Neutral Atom Qubit Array", Phys. Rev. Lett. 123, 230501, 2019 werden eine hochgradig zuverlässige Zwei-Qubit-Rydberg-Blockade und Verschränkung eines Atompaares in einer großen zweidimensionalen Qubit-Anordnung beschrieben. Verbesserte experimentelle Methoden haben die beobachtete Bell-Zustandsgüte auf F_{Bell} = 0,86(2) erhöht. Unter Berücksichtigung von Fehlern bei der Zustandsvorbereitung und Messung ergibt sich eine Genauigkeit von 0,88. Unter Berücksichtigung von Fehlern bei Einzel-Qubit-Operationen wird gefolgert, dass ein Bell-Zustand, der mit dem Rydberg-vermittelten CZ-Gatter erzeugte Bell-Zustand eine Genauigkeit von 0.89 hat. Ein Vergleich mit einem detaillierten Fehlermodell auf der Grundlage von Quantenprozessmatrizen zeigt, dass die endliche Atomtemperatur und das Laserrauschen die wichtigsten Fehlerquellen sind, die zu der beobachteten Ungenauigkeit des Gatters beitragen.

In I. S. Madjarov, J. P. Covey, A. L. Shaw, J. Choi, A. Kale, A. Cooper, H. Pichler, V. Schkolnik, J. R. Williams, and M. Endres, "High-fidelity entanglement and detection of alkaline-earth Rydberg atoms", Nature Physics 16, 857, 2020 werden gefangene neutrale Strontium-Atome als Plattform für die Quantenwissenschaft beschrieben, auf der mit hochangeregten Rydberg-Zuständen Verschränkungsrekorde aufgestellt wurden. Die kontrollierte Erzeugung von Zwei-Qubit-Verschränkungen war jedoch bisher auf Alkali-Atome beschränkt, so dass die Ausnutzung von Atomen mit komplexerer elektronischer Strukturen ein offenes Feld darstellt, das zu verbesserten und zu grundlegend anderen Anwendungen wie quantenverstärkten optischen Uhren führen könnte. Es wird ein Ansatz demonstriert, der die zweiwertige Elektronenstruktur einzelner Erdalkali-Rydberg-Atome nutzt. Es werden Güten für die Rydberg Zustandsdetektion, einatomige Rabi-Operationen und zweiatomige Verschränkung gefunden, die bis dahin veröffentlichte Werte übertreffen.

In F. Meinert, C. Hölzl, M. Ali Nebioglu, A. D'Arnese, P. Karl, M. Dressel, and M. Scheffler, "Indium tin oxide films meet circular Rydberg atoms: Prospects for novel quantum simulation schemes", Phys. Rev. Research 2, 023192, 2020 werden langlebige zirkuläre Rydberg-Atome im Zusammenhang mit Kohärenzzeiten in Rydberg-basierten Quantensimulationen beschrieben. Es wird ein Ansatz zur Stabilisierung zirkularer Rydberg-Zustände gegen spontanen und durch Schwarzkörper induzierten Zerfall gezeigt, in welchem ein Unterdrückungskondensator aus dünnen Indium-Zinn-Oxid (ITO)-Filmen genutzt wird, wobei die Reflexion von Mikrowellen mit Transparenz im sichtbaren Spektralbereich kombiniert wird. Zu diesem Zweck werden eine detaillierte Charakterisierung solcher Schichten mit komplementären spektroskopischen Methoden bei GHz- und THz-Frequenzen Frequenzen durchgeführt und Bedingungen ermittelt, unter denen zirkuläre Zustandslebensdauern von bis zu zehn Millisekunden in einer Umgebung mit Raumtemperatur erreicht werden.

In Engel, Felix, et al. "Observation of Rydberg blockade induced by a single ion." Physical Review Letters 121.19 (2018): 193401 wird die langreichweitige Wechselwirkung eines einzelnen Ions mit einem hochangeregten ultrakalten Rydberg-Atom beschrieben und über die direkte Beobachtung der ioneninduzierten Rydberg-Anregungsblockade über Entfernungen von dutzenden Mikrometern berichtet. Das verwendete hybride Ionen-Atom-System wird direkt aus einem ultrakalten Atomensemble durch Photoionisation einer einzelnen Rydberg-Anregung erzeugt, wobei ein Zwei-Photonen-Schema verwendet wird, das speziell für die Erzeugung eines sehr niederenergetischen Ions geeignet ist. Die Bewegung des Ions wird präzise durch kleine elektrische Feldern gesteuert, was es ermöglicht, den Blockademechanismus für eine Reihe von Hauptquantenzahlen zu analysieren. Schließlich wird die Eignung des Ions als hochempfindlicher Sensor für elektrische Felder auf der Basis von Einzelatomen untersucht.

US 9,934,469 B1 beschreibt ein Verfahren zur Herstellung eines verschränkten Quantenzustands eines atomaren Ensembles. Das Verfahren umfasst das Laden jedes Atoms des Atom-Ensembles in eine entsprechende optische Falle; das Versetzen jedes Atoms des Atom-Ensembles in einen gleichen ersten atomaren Quantenzustand durch Einstrahlen von Pumpstrahlung; das Annähern der Atome des Atom-Ensembles bis auf eine Dipol-Dipol-Wechselwirkungslänge aneinander; Rydberg-Dressing des Atom-Ensembles; während des Rydberg-Dressing-Vorgangs Anregen des Atom-Ensembles mit einem Raman-Puls, der so abgestimmt ist, dass er einen Grundzustands-Hyperfeinübergang von dem ersten Atom-Quantenzustand zu einem zweiten Atom-Quantenzustand stimuliert; und Trennen der Atome des Atom-Ensembles um mehr als eine Dipol-Dipol-Wechselwirkungslänge.

Trotz der Vorteile, die durch die bekannten Vorrichtungen und Verfahren bereits erreicht werden konnten, bleiben verschiedene technische Herausforderungen nach wie vor bestehen. Insbesondere stellen nicht zuverlässig kontrollierte elektrische Felder eine technische Limitierung für die Güte von Quantenoperationen mit Rydberg-Atomen dar. Grundsätzlich lassen sich zur Abschirmung und/oder Kontrolle elektrischer Felder beispielsweise Elektroden oder auch Faraday-Käfige verwenden. Elektroden oder Faraday-Käfige zur Kontrolle elektrischer Felder können jedoch den optischen Zugang zu den Rydberg-Atomen einschränken und Zugangsöffnungen für den Strahlengang in dem Faraday-Käfig oder den Elektroden erforderlich machen. Für Quantencomputer-Anwendungen und für optische Pinzetten ist jedoch ein optischer Zugang mit hoher numerischer Apertur zwingend notwendig. Die Zugangsöffnungen müssten damit sehr groß gestaltet sein, was sich wiederum direkt negativ auf die abschirmende Wirkung der Elektroden oder Faraday-Käfige auswirkt.

### Aufgabe der Erfindung

Es wäre daher wünschenswert, eine Zelle zur Durchführung quantenoptischer Messungen an mindestens einer Atomwolke, ein System zur Durchführung quantenoptischer Messungen an mindestens einer Atomwolke, einen Quantencomputer sowie ein Verfahren zur Durchführung quantenoptischer Messungen an mindestens einer Atomwolke bereitzustellen, welche die Nachteile bekannter Vorrichtungen und Verfahren zumindest weitgehend vermeiden. Insbesondere soll die räumliche und zeitliche Kontrolle elektrischer Felder in einer Zelle zur Durchführung quantenoptischer Messungen an mindestens einer Atomwolke zuverlässig gewährleistet werden ohne den optischen Zugang zu der Atomwolke erheblich einzuschränken.

### Allgemeine Beschreibung der Erfindung

Diese Aufgabe wird adressiert durch eine Zelle zur Durchführung quantenoptischer Messungen an mindestens einer Atomwolke, ein System zur Durchführung quantenoptischer Messungen an mindestens einer Atomwolke, einen Quantencomputer sowie ein Verfahren zur Durchführung quantenoptischer Messungen an mindestens einer Atomwolke mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf, "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird eine Zelle zur Durchführung quantenoptischer Messungen an mindestens einer Atomwolke, insbesondere zum Einsatz in einem Quantencomputer, vorgeschlagen.

Der Begriff "quantenoptische Messung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf optische Messungen an einem oder mehreren Messobjekten beziehen, die quantenmechanischen Gesetzmäßigkeiten unterliegen. Insbesondere kann es sich hierbei um Messungen handeln, bei denen ein oder mehrere Lichtstrahlen, insbesondere Laserstrahlen, mit Materie wechselwirken, beispielsweise mit Atomen oder Molekülen, insbesondere in einem Vakuum. Unter quantenoptische Messungen können insbesondere Messungen an physikalischer Materie im atomaren und/oder subatomaren Größenbereich fallen, wie beispielsweise an Rydberg-Atomen, also Atomen, welche sich im Rydberg-Zustand befinden, bei dem beispielsweise das äußerste Elektron im Mittel wesentlich weiter vom Zentrum entfernt ist als im Grundzustand. Wie dem Fachmann bekannt ist, beeinflusst eine Messung insbesondere auf dem Gebiet der Quantenmechanik einen Zustand des Messobjekts. Die quantenoptische Messung kann sich auf eine, insbesondere gezielte, Manipulation des Zustands des Messobjektes beziehen. Beispielsweise kann ein Atom durch einen darauf gerichteten Lichtstrahl energetisch angeregt werden, beispielsweise in einen Rydberg-Zustand oder von einem Rydberg-Zustand in einen anderen Rydberg-Zustand.

Der Begriff "Zelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine prinzipiell beliebige Vorrichtung beziehen, welche mindestens einen Innenraum definiert, in welchem Experimente durchgeführt werden können oder Materie für Experimente, insbesondere für quantenoptische Experimente, aufgenommen werden kann. Insbesondere kann die Zelle derart eingerichtet sein, dass in dieser quantenoptische Messungen durchgeführt werden können. Die Zelle kann insbesondere eingerichtet sein, um die in ihr stattfindenden quantenoptischen Messungen gegen die Umgebung außerhalb der Zelle abzuschirmen, beispielsweise gegen äußere mechanische Kräfte wie z.B. Vibrationen, gegen eindringende physikalische Materie wie z.B. Verunreinigungen, gegen elektromagnetische Strahlung, gegen eine Umgebungstemperatur, gegen einen Umgebungsdruck oder gegen eine Kombination zweier oder mehrerer oder aller der genannten Einflüsse. Die Zelle kann mindestens eine Zellwand umfassen. Die Zellwand kann einen Zellinnenraum zumindest weitestgehend vollständig umschließen, insbesondere vollständig umschließen. Die Zellwand kann beispielsweise, wie nachfolgend noch näher beschrieben wird, vollständig oder teilweise aus mindestens einem formstabilen transparenten Material hergestellt sein, beispielsweise aus Quarz und/oder aus Glas. Die Zelle kann insbesondere mindestens eine magneto-optische Falle (MOT) umfassen, eine MOT bilden oder Bestandteil einer MOT sein. Eine MOT ist grundsätzlich eine Vakuumvorrichtung, welche zur Kühlung, insbesondere zur Laserkühlung, und zur Speicherung von Atomen eingerichtet ist, insbesondere durch ein Zusammenwirken von Magnetfeldern und Laserstrahlen. Die Zelle kann weiterhin eingerichtet sein, um die in ihr befindlichen Atome gezielt zu manipulieren bzw. die in ihr stattfindenden quantenoptischen Messungen gezielt zu beeinflussen, oder um eine derartige Manipulation oder Beeinflussung der in ihr befindlichen Atome zu ermöglichen, wie weiter unten noch näher erläutert werden wird.

Der Begriff "Atomwolke", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein prinzipiell beliebiges Ensemble oder eine Ansammlung von Atomen oder auch Molekülen beziehen. Die Atomwolke kann lokal eingeschränkt sein, insbesondere durch die Zelle. Die Atomwolke kann Atome beliebiger chemischer Elemente in beliebiger Anzahl und in beliebigem physikalischem, insbesondere internen quantenmechanischem, Zustand umfassen. Insbesondere kann die Atomwolke Atome in beliebigem energetischen Zustand umfassen. Insbesondere kann die Atomwolke eine Mehrzahl an Atomen, eine Mehrzahl an Molekülen oder auch eine Mehrzahl an Ionen und/oder Isotopen umfassen. Insbesondere kann die Atomwolke ausschließlich Atome eines einzigen chemischen Elements umfassen. Beispielsweise kann die Atomwolke Rubidium-Atome und/oder Strontium-Atome umfassen. Grundsätzlich sind quantenoptische Messungen jedoch auch an anderen Elementen oder auch an Molekülen möglich, wobei häufig Alkalielemente und/oder Erdalkalielemente verwendet werden.

Der Begriff "Quantencomputer", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozessor und/oder Datenspeicher beziehen, der auf der Basis quantenmechanischer Zustände, quantenmechanischer Kohärenz und/oder Quantenverschränkungen arbeitet. Dem Fachmann sind allgemein zahlreiche Ausführungsformen von Quantencomputern bekannt. Typischerweise werden Informationen in Quantencomputern mit Hilfe von Quantenbits, auch Qubits genannt, dargestellt. Realisiert werden die Quantenbits typischerweise über verschiedene Zustände eines quantenmechanischen Zwei-Zustands-Systems, beispielsweise über den Spin eines Elektrons oder über Energiezustände eines Atoms. Auch andere Realisierung sind möglich. Quantenmechanische Überlagerungen der Zustände sind möglich. Mehrere Quantenbits können in Quantenregistern zusammengefasst werden. Der Zustand eines Quantenregisters kann quantenmechanisch verschränkt sein. Rechenoperationen, hier auch Quantenoperationen genannt, können mit Hilfe von Quantengattern durchgeführt werden. Realisiert werden die Quantengatter typischerweise über elementare physikalische Manipulationen eines oder mehrerer Quantenbits. Beispielsweise kann der Spin eines Elektrons über ein angelegtes Magnetfeld beeinflusst werden oder der Energiezustand eines Atoms kann über Gatterlaser, also eingestrahlte Laserpulse, optisch beeinflusst werden.

Die Zelle umfasst eine Kontrolleinheit zur Kontrolle elektrischer Felder am Ort der Atomwolke. Der Begriff "Kontrolleinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine einteilige oder mehrteilige Vorrichtung beziehen, welche eingerichtet ist, um eine oder mehrere physikalische Einflussgrößen gezielt zu beeinflussen, zu kontrollieren, zu steuern oder zu regeln. Im vorliegenden Fall ist die Kontrolleinheit Bestandteil der Zelle und ist eingerichtet, um elektrische Felder am Ort der Atomwolke innerhalb der Zelle gezielt zu beeinflussen, beispielsweise in mindestens einer Raumrichtung zu erhöhen und/oder zu erniedrigen. Die Kontrolleinheit kann insbesondere auch als Faraday-Käfig wirken und eingerichtet sein, um äußere elektrische Felder am Ort der Atomwolke zumindest weitgehend abzuschirmen, beispielsweise auf weniger als 0.1% ihres Wertes zu dämpfen, insbesondere auf weniger als 0.01% ihres Wertes und insbesondere auf weniger als 0.001% ihres Wertes.

Die Kontrolleinheit umfasst:
- mindestens ein Gehäuse mit mindestens einem Innenraum zur Aufnahme der Atomwolke und mit mindestens einer Öffnung zum Einbringen der Atome der Atomwolke in den Innenraum; und
- mindestens zwei Elektroden,
   o wobei die Elektroden unabhängig voneinander mit elektrischen Potenzialen beaufschlagbar sind und eingerichtet sind, um mindestens ein elektrisches Feld in dem Innenraum zu beeinflussen,
   o wobei die Elektroden mechanisch mit dem Gehäuse verbunden sind,
   o wobei mindestens eine der Elektroden zumindest teilweise durch mindestens ein optisches Fenster gebildet wird, durch welches mindestens ein Lichtstrahl zur Wechselwirkung mit der Atomwolke in den Innenraum einstrahlbar ist, wobei das optische Fenster mindestens ein transparentes Substrat und mindestens eine transparente elektrisch leitfähige Beschichtung des Substrats umfasst.

Der Begriff "Gehäuse", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich allgemein auf eine mechanische Struktur beziehen, beispielsweise ein starres Element oder eine starre Vorrichtung, welche eingerichtet ist, um ein oder mehrere weitere Elemente einzuschließen. Insbesondere kann sich der Begriff Gehäuse auf ein Behältnis beziehen, welches dazu eingerichtet ist die Atomwolke aufzunehmen. Das Gehäuse kann zumindest Bestandteil einer MOT sein und/oder in einer MOT eingesetzt werden. Das Gehäuse kann sich innerhalb der Zelle, insbesondere innerhalb der mindestens einen Zellwand der Zelle, befinden. Die Elektroden können an dem Gehäuse innerhalb der Zelle montiert sein. Die Elektroden können integraler Bestandteil des Gehäuses sein. Das Gehäuse kann elektrisch isolierende Elemente, beispielsweise Keramik-Elemente, umfassen. Die Elektroden können über die elektrisch isolierenden Elemente miteinander verbunden sein. Auch andere Ausführungsformen sind möglich.

Der Begriff "Elektrode", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung oder auf ein Element beziehen, welches zumindest teilweise elektrisch leitfähig ist und/oder eingerichtet ist, um elektrische Ladungen, insbesondere Elektronen, zu transportieren. Insbesondere kann die Elektrode ganz oder teilweise aus mindestens einem metallischen Material und/oder mindestens einem halbleitenden Material hergestellt sein. Die Elektrode kann beispielsweise als freistehendes, sich selbst tragendes Element ausgestaltet sein oder kann auch auf mindestens ein Trägerelement aufgebracht sein. Die Elektrode kann, wie nachfolgend noch näher ausgeführt wird, über mindestens eine Elektrodenzuleitung elektrisch kontaktiert sein und über die mindestens eine Elektrodenzuleitung mindestens einem Potenzial beaufschlagbar sein. Die Elektrode kann mindestens eine Elektrodenfläche oder Elektrodenoberfläche aufweisen, welche Ausgangs- oder Endpunkt für elektrische Feldlinien eines elektrischen Feldes sein kann.

Der Begriff "beaufschlagbar", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere darauf beziehen, dass an die Elektroden ein elektrisches Potential angelegt werden kann. Insbesondere können die Elektroden eingerichtet sein, um mit mindestens einer Spannungsquelle verbunden zu werden, sodass über die Spannungsquelle ein elektrisches Potential an die Elektroden angelegt werden kann, insbesondere an jede Elektrode ein eigenes individuelles elektrisches Potential. Beispielsweise können jeweils unterschiedliche elektrische Potentiale an die Elektroden angelegt werden. Die elektrischen Potentiale können dazu geeignet sein elektrische Felder im Bereich von typischerweise 1 µV/cm bis 1kV/cm zu erzeugen. Die Elektroden können dazu mindestens ein elektrisch leitfähiges Material, beispielsweise ein Metall, umfassen. Für die Beaufschlagung mit den elektrischen Potenzialen können die Elektroden, wie nachfolgend noch näher ausgeführt wird, jeweils elektrisch mit mindestens einem elektrischen Anschluss verbunden sein, beispielsweise mindestens einem Steckverbinder, über welchen die Potenziale auf die Elektroden aufgebracht werden können. Die elektrischen Anschlüsse können beispielsweise außerhalb der Zelle angeordnet sein und/oder von außerhalb der Zelle zugänglich sein. Die elektrischen Anschlüsse können beispielsweise Standard-Steckverbinder umfassen, beispielsweise Sub-D-Verbinder, Co-axial-Verbinder, oder Hochspannungs-Co-axial-Verbinder. Co-axial-Verbinder können BNC-Verbinder oder SMA-Verbinder umfassen. Hochspannungs-Co-axial-Verbinder können MHV-Verbinder oder SHV-Verbinder umfassen.

Die Elektroden sind, wie oben ausgeführt, mechanisch mit dem Gehäuse verbunden. Dies kann auf mehrere Weisen erfolgen, wie nachfolgend noch näher ausgeführt wird. Insbesondere können die Elektroden ganz oder teilweise durch mindestens ein Halteelement, welches Bestandteil des Gehäuses ist und/oder mit dem Gehäuse mechanisch verbunden ist, gehalten werden. Alternativ oder zusätzlich können die Elektroden auch ganz oder teilweise in das Gehäuse integriert sein und/oder Bestandteil des Gehäuses selbst bilden.

Mindestens eine der Elektroden wird, wie ausgeführt, durch mindestens ein optisches Fenster gebildet, durch welches mindestens ein Lichtstrahl zur Wechselwirkung mit der Atomwolke in den Innenraum des Gehäuses einstrahlbar ist. Der Begriff "optisches Fenster", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein optisches Bauteil oder Element beziehen, welches mindestens ein transparentes Material umfasst, wobei das transparente Material insbesondere zumindest teilweise transparent in mindestens einem Spektralbereich des Lichtstrahls ist. Das optische Fenster kann zumindest einen optischen Filter und/oder zumindest einen Polarisator umfassen. Das optische Fenster kann insbesondere eine hohe Oberflächenqualität aufweisen, beispielsweise eine Qualität mit Schwankungen oder Rauigkeiten (RMS) von weniger als λ/4, insbesondere von weniger als λ/10, wobei λ sich auf die Wellenlänge des Lichtstrahls bezieht. Mögliche Wellenlängen werden unten noch näher angegeben.

Der Begriff "transparent", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine vollständige oder zumindest teilweise Durchlässigkeit für elektromagnetische Strahlung, insbesondere für Licht, beziehen. Die Transparenz kann sich auf mindestens einen eingeschränkten Spektralbereich beziehen. Weitere Beispiele werden unten ausgeführt.

Der Begriff "Substrat", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Trägerelement oder eine Kombination von Trägerelementen beziehen, welche eingerichtet sind, um mindestens ein weiteres Element, insbesondere mindestens ein elektrisches Funktionselement, zu tragen. Das Substrat kann beispielsweise mindestens ein ebenes Substrat sein, mit mindestens einer glatten, insbesondere planaren Oberfläche. Beispielsweise kann das Substrat ein plattenförmiges oder scheibenförmiges Substrat sein, mit zwei einander gegenüberliegenden Oberflächen, insbesondere planaren Oberflächen. Beispielsweise kann das Substrat ein Substrat aus mindestens einem transparenten Material sein wie beispielsweise Glas und/oder Quarz. Dabei sind einschichtige Substrate oder auch Substrate mit einem mehrschichtigen Schichtaufbau möglich. Das Substrat kann beispielsweise einen runden, ovalen oder polygonalen Querschnitt aufweisen. Das Substrat kann beispielsweise eine Dicke von 0.1 mm bis 15 mm aufweisen, beispielsweise eine Dicke von 3 mm bis 8 mm. Auch andere Dimensionen sind jedoch grundsätzlich möglich.

Der Begriff "elektrisch leitfähig", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Eigenschaft eines Elements, beispielsweise einer Schicht oder eines makroskopischen Elements, beziehen, welche darin besteht, dass das Element elektrischen Strom leiten kann oder elektrische Ladungsträger transportieren kann, insbesondere Elektronen. Insbesondere kann es sich somit um ein Element handeln, welches über freie Ladungsträger verfügt, beispielsweise Elektronen oder Defektelektronen. Das Element kann, insbesondere wenn es sich um ein Volumenelement handelt, eine elektrische Leitfähigkeit von mindestens 10⁻⁵ S/m aufweisen, insbesondere eine elektrische Leitfähigkeit von mindestens 10⁻³ S/m, mindestens 10° S/m oder mehr. Im Fall von metallischen Elementen kann das Element insbesondere eine Leitfähigkeit von mindestens 10³ S/m aufweisen, insbesondere von mindestens 10⁵ S/m oder sogar von mindestens 10⁶ S/m. Im Falle eines schichtförmigen Elements oder einer leitfähigen Beschichtung kann die leitfähige Beschichtung insbesondere einen Schichtwiderstand von nicht mehr als 1000 Ohm/sq aufweisen, beispielsweise einen Schichtwiderstand von nicht mehr als 100 Ohm/sq, insbesondere von nicht mehr als 10 Ohm/sq. Das leitfähige Element kann beispielsweise ganz oder teilweise aus einem metallischen Material und/oder einem halbleitenden Material hergestellt sein.

Der Begriff "Beschichtung", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Schicht oder einen Schichtaufbau aus mehreren Schichten beziehen, also auf eine flächig auf ein Substrat aufgebrachte zusammenhängende Menge mindestens eines Stoffs oder Stoffgemischs. Insbesondere kann die Beschichtung als solche eine Dicke im Bereich von weniger als 1 mm aufweisen, beispielsweise eine Dicke von 1 nm bis 50 µm, insbesondere eine Dicke von 20 nm bis 10 µm. Typische Dicken von leitfähigen Beschichtungen, die im Halbleiterbereich verwendet werden und die auch vorliegend eingesetzt werden können, liegen beispielsweise im Bereich von 10 nm bis 10 µm. Beispielsweise kann, wie unten ausgeführt, mindestens ein transparentes leitfähiges oder halbleitendes Metalloxid eingesetzt werden, beispielsweise Indiumzinnoxid, welches typischerweise eine Dicke im Bereich von 10 nm bis 2000 nm aufweist. Auch andere Schichtdicken sind jedoch grundsätzlich einsetzbar.

Der Begriff "Licht", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf elektromagnetische Strahlung in mindestens einem Spektralbereich ausgewählt aus dem sichtbaren Spektralbereich, dem ultravioletten Spektralbereich und dem infraroten Spektralbereich beziehen. Der Begriff "Lichtstrahl", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Lichtmenge beziehen, welche in eine bestimmte Richtung emittiert und/oder gelenkt wird. Der Lichtstrahl kann insbesondere ein kohärenter Lichtstrahl sein. Der Lichtstrahl kann insbesondere mindestens einen Laserstrahl umfassen. Der Lichtstrahl kann zumindest Teil einer optischen Pinzette sein, also beispielsweise Atome festhalten und/oder gezielt bewegen. Der Lichtstrahl kann alternativ oder zusätzlich zur Laserkühlung von Atomen genutzt werden. Der Lichtstrahl kann zumindest Teil eines Gatterlasers sein mit dessen Hilfe Quantenoperationen, beispielsweise über energetische Anregungen von Atomen in Rydberg-Zustände, durchgeführt werden können.

Die Kontrolleinheit, wie sie oben beschrieben ist und wie sie nachfolgend exemplarisch noch weiter ausgeführt wird, kann eingesetzt werden, um wirksam elektrische Felder am Ort der Atomwolke abzuschirmen und/oder zu beeinflussen, also insgesamt zu kontrollieren. Im Gegensatz zu einfachen Faraday-Käfigen bietet die Ausgestaltung, bei der mindestens eine der Elektroden durch das mindestens eine optische Fenster mit der elektrisch leitfähigen Beschichtung gebildet wird, die Möglichkeit, sowohl praktisch ungestört Licht in den Innenraum einzustrahlen als auch über die leitfähige Beschichtung und die Beaufschlagung derselben mit einem geeigneten elektrischen Potenzial das elektrische Feld Innenraum des Gehäuses zu beeinflussen. Dabei lassen sich, wie nachfolgend noch näher ausgeführt wird, eine oder mehrere der Elektroden mit dem mindestens einen optischen Fenster mit der leitfähigen Beschichtung ausgestalten, wohingegen optional eine oder mehrere weitere Elektroden vorhanden sein können, welche ebenfalls mit einem elektrischen Potenzial beaufschlagbar sind und welche beispielsweise aus einem metallischen Material, beispielsweise Edelstahl, hergestellt sein können. Auf diese Weise lassen sich transparente und intransparente Elektroden miteinander kombinieren. Insbesondere lassen sich die transparenten Elektroden derart in das Gehäuse integrieren oder derart mit dem Gehäuse verbinden, dass mehrere Lichtstrahlen aus unterschiedlichen Raumrichtungen, beispielsweise in einem Winkel von 0° bis 180° zueinander, in den Innenraum eingestrahlt werden können. Auf diese Weise lässt sich die Atomwolke aus unterschiedlichen Raumrichtungen bestrahlen. Während Metallelektroden typischerweise den Nachteil aufweisen, dass für die Einstrahlung von Licht Öffnungen vorgesehen sein müssen, welche die abschirmende Wirkung der Elektroden schwächen oder die Geometrie des elektrischen Feldes beeinflussen, lässt sich das mindestens eine optische Fenster grundsätzlich mit einer beliebigen Größe ausgestalten, sodass beispielsweise auch Licht über eine Optik mit hoher numerischer Apparatur, insbesondere mit hohem Öffnungswinkel, in den Innenraum eingestrahlt werden kann. Letzteres ist insbesondere für optische Pinzetten von Bedeutung, bei denen eine möglichst kleine Rayleigh-Länge im Bereich des Fokus von Bedeutung ist. Eine Einstrahlung durch Metallelektroden mit entsprechenden Löchern erfordert in diesem Fall typischerweise Lochdimensionen, welche einen erheblichen negativen Einfluss auf die abschirmende Wirkung oder die Feldgeometrie im Innenraum haben. Durch die vorgeschlagene Kontrolleinheit mit dem Gehäuse und den mindestens zwei Elektroden, von denen mindestens eine als optisches Fenster ausgestaltet ist und die leitfähige Beschichtung auf dem transparenten Substrat aufweist, lässt sich diese Problematik weitgehend vermeiden. Das Gehäuse lässt sich beispielsweise als Faraday-Käfig ausgestalten, beispielsweise indem dieses ganz oder teilweise aus einem elektrisch leitfähigen Material hergestellt wird, beispielsweise aus Edelstahl, wobei durch die mindestens eine Elektrode mit dem optischen Fenster gleichwohl Licht in den Innenraum eingestrahlt werden kann. Insbesondere kann die Kontrolleinheit derart ausgestaltet sein, dass, durch das Gehäuse und die mindestens zwei Elektroden, ein Faraday-Käfig gebildet wird, über den die Atomwolke in allen drei Raumrichtungen gegenüber elektrischen Feldern abgeschirmt wird und/oder über den das elektrische Feld im Innenraum in allen drei Raumrichtungen durch eine entsprechende Beaufschlagung der Elektroden mit elektrischen Potenzialen beeinflussbar ist.

Die mindestens eine Elektrode mit dem mindestens einen optischen Fenster kann zumindest teilweise als metallische Platte mit mindestens einer Öffnung ausgebildet sein, insbesondere als Edelstahlplatte. Alternativ zu Edelstahl sind jedoch auch andere Metalle denkbar. Beispielsweise kann die metallische Platte Titan umfassen. Die mindestens eine Öffnung kann grundsätzlich eine beliebige Geometrie aufweisen, beispielsweise eine runde oder polygonale Geometrie. Beispielsweise kann die Öffnung kreisförmig oder oval ausgestaltet sein. Beispiele werden nachfolgend noch näher erläutert. Die Öffnung kann beispielsweise einen Durchmesser oder Äquivalentdurchmesser von 1 mm bis 100 mm aufweisen, beispielsweise einen Durchmesser oder Äquivalentdurchmesser von 10 mm bis 50 mm. Der Einsatz von Edelstahl erlaubt es im Allgemeinen, elektrische Felder auf einer Skala von 10 ns zu schalten. Zudem ist Edelstahl gut geeignet für den Einsatz im Ultrahochvakuum. Das mindestens eine optische Fenster kann in die Öffnung integriert sein oder kann die Öffnung beispielsweise von oben oder von unten vollständig oder teilweise überdecken oder abdecken. So kann das optische Fenster die Öffnung insbesondere zumindest teilweise, insbesondere vollständig, überdecken. Beispielsweise kann das optische Fenster vor der Öffnung in einem beliebigem Abstand zu der Öffnung angeordnet sein, beispielsweise in einem Abstand von nicht mehr als 10 mm. Alternativ oder zusätzlich kann das optische Fenster mindestens genauso große Abmessungen wie die Öffnung aufweisen, insbesondere größere Abmessungen als die Öffnung, haben.

Die mindestens eine Elektrode mit dem mindestens einen optischen Fenster kann mindestens eine Halteeinheit umfassen. Die Halteeinheit kann eingerichtet sein, um das optische Fenster zu halten. Die Halteeinheit kann weiterhin eingerichtet sein, um die transparente elektrisch leitfähige Beschichtung elektrisch zu kontaktieren. Der Begriff "Halteeinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Vorrichtung beziehen, welche eingerichtet ist, um ein Objekt direkt und/oder indirekt zu fixieren, tragen, stützen und/oder halten. Die Halteeinheit kann eingerichtet sein, um das Objekt mit Hilfe mindestens eines weiteren Objekts zu fixieren. Beispielsweise kann die Halteeinheit eingerichtet sein, um das Objekt gegen das weitere Objekt zu pressen. Beispielsweise kann die Halteeinheit eingerichtet sein, um das optische Fenster außerhalb des Innenraums des Gehäuses der Zelle vor der Öffnung der metallischen Platte zu halten, insbesondere in festem Abstand zu der Öffnung und insbesondere planparallel zu der Zellwand. Die Halteeinheit kann mindestens einen aktiven oder passiven Aktor umfassen, beispielsweise mindestens ein Federelement. So kann die Halteeinheit mindestens eine mechanische Feder, beispielsweise eine Schraubendruckfeder, umfassen, mit deren Hilfe ein fester Abstand des optischen Fensters zu der Öffnung fixiert werden kann, beispielsweise über ein Pressen gegen die mechanische Feder. Beispielsweise kann die Halteeinheit an eine Zellwand der Zelle angrenzen und eingerichtet sein, um mit Hilfe der mechanischen Feder zwischen der Zellwand und der Öffnung eingespannt zu werden. Der Einsatz von mechanischen Federn erlaubt es im Allgemeinen die Kontrolleinheit auf über 100 °C aufzuheizen ohne einen Bruch von Glaselementen zu generieren. Solche Heizprozesse sind im Allgemeinen notwendig um beispielsweise ein Hochvakuum zu erzeugen. Die Halteeinheit kann weiterhin mindestens einen Abstandshalter umfassen, beispielsweise einen Abstandshalter zur Zellwand, also einen an die Zellwand angrenzenden Abstandhalter. Die Halteeinheit kann mindestens ein mechanisch robustes Material umfassen, beispielsweise ein Metall. Andere Ausführungsformen sind ebenso möglich.

Die Halteeinheit kann insbesondere eingerichtet sein, um das optische Fenster in einer Klemmhalterung zu halten. Die Klemmhalterung kann mindestens ein elektrisch leitfähiges Element aufweisen, beispielsweise einen metallischen Rahmen, insbesondere einen Edelstahlrahmen, welches auf die transparente elektrisch leitfähige Beschichtung gepresst wird. Der Begriff "Klemmhalterung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Vorrichtung beziehen, welche eingerichtet ist, um ein Objekt, insbesondere das optische Fenster, kraftschlüssig zu halten, insbesondere einzuklemmen. Insbesondere kann die Klemmhalterung eingerichtet sein, um das optische Fenster an mindestens einem Rand des optischen Fensters einzuklemmen, sodass insbesondere ein mittlerer Teil des optischen Fensters frei zugänglich bleibt. Die Klemmhalterung kann somit eingerichtet sein, um das optische Fenster zu fixieren oder zumindest um eine Fixierung des optischen Fensters zu unterstützen. Beispielsweise kann die Klemmhalterung gegen die mechanische Feder gepresst werden oder durch die mechanische Feder mit einer Kraft beaufschlagt werden. Die mechanische Feder kann beispielsweise zwischen dem Substrat und einem Rahmen der Halteeinheit eingebracht sein. Die mechanische Feder kann dazu beitragen, dass die Halteeinheit und das optische Fenster auf über 100°C geheizt werden können, ohne dass das optische Finster bricht. Ein derartiges Ausheizen kann beispielsweise bei der Erzeugung eines Ultrahochvakuums erfolgen. Die Klemmhalterung kann eingerichtet sein, um das optische Fenster zu schützen, beispielsweise vor einer direkten Druckausübung durch die mechanische Feder auf das optische Fenster. Beispielsweise kann die Klemmhalterung eingerichtet sein, um zwischen der mechanischen Feder und dem an die Zellwand angrenzenden Abstandhalter eingespannt zu werden. Die Klemmhalterung kann mindestens ein mechanisch robustes Material umfassen, beispielsweise ein Metall. Andere Ausführungsformen sind ebenso möglich.

Die mindestens eine Halteeinheit kann in mindestens einer der folgenden Weisen eingerichtet sein:
- die Halteeinheit kann ein integraler Bestandteil des Gehäuses sein;
- die Halteeinheit kann über mindestens ein Verbindungselement, insbesondere über mindestens einen Verbindungsstift, mit dem Gehäuse verbunden sein.

Der Begriff "integraler Bestandteil", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf darauf beziehen, dass ein erstes Objekt vollständig oder zumindest wesentlich in ein zweites Objekt eingebunden ist und/oder einstückig mit dem zweiten Objekt ausgebildet ist. Insbesondere kann die Halteeinheit in das Gehäuse eingebunden sein. Beispielsweise kann die Halteeinheit einen Teil des Gehäuses bilden, insbesondere des aus Edelstahl hergestellten Gehäuses.

Der Begriff "Verbindungselement", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Vorrichtung beziehen, welche eingerichtet ist, um zwei Objekte mechanisch aneinander zu koppeln, beispielsweise zumindest lose, vorzugsweise aber auch fest, miteinander zu verbinden oder zu koppeln. Das Verbindungselement kann insbesondere mindestens einen Verbindungsstift umfassen. Beispielsweise kann der Verbindungsstift von außen an das Gehäuse montiert sein. Beispielsweise kann die Halteeinheit, insbesondere die Klemmhalterung, zu den Abmessungen des Verbindungsstifts korrespondierende Bohrungen umfassen, sodass die Halteeinheit auf den Verbindungsstift aufsteckbar ist. Beispielsweise kann auf den Verbindungsstift die mechanische Feder aufsteckbar sein. Andere Ausführungsformen sind ebenso möglich. Die Halteeinheit kann insbesondere derart mit dem Gehäuse verbunden oder als integraler Bestandteil des Gehäuses ausgebildet sein, dass eine Position und/oder Orientierung des mindestens einen optischen Fensters relativ zu dem Innenraum und/oder zu einer das Gehäuse aufnehmenden Vakuumzelle, insbesondere einer Glaszelle, festgelegt ist, definiert ist oder zumindest einstellbar ist.

Die Zelle kann weiterhin mindestens zwei elektrische Anschlüsse zum Verbinden mit mindestens einer Spannungsquelle umfassen. Die elektrischen Anschlüsse können elektrisch mit den Elektroden verbunden sein. Insbesondere kann je mindestens ein Anschluss mit je mindestens einer Elektrode verbunden sein. Auf diese Weise können die Elektroden mit elektrischen Potentialen beaufschlagbar sein. Die elektrischen Anschlüsse können insbesondere lösbare elektrische Anschlüsse umfassen wie beispielsweise Steckverbinder. Die elektrischen Anschlüsse können beispielsweise über elektrische Verbindungen mit den jeweiligen Elektroden verbunden sein. Die elektrischen Verbindungen können beispielsweise Kabelverbindungen umfassen. So kann beispielsweise jeweils mindestens ein Anschluss mit jeweils mindestens einer der Elektroden über mindestens eine elektrische Verbindung verbunden sein, beispielsweise eine Kabelverbindung. Die Verbindungen, beispielsweise die Kabelverbindungen, können beispielsweise mit hochvakuumkompatiblen Isolierungen, beispielsweise Kaptonisolierungen, versehen sein. Die Zelle kann beispielsweise einen Hochvakuumbereich aufweisen. Das Gehäuse und die Elektroden können in dem Hochvakuumbereich angeordnet sein. Die elektrischen Anschlüsse können beispielsweise ganz oder teilweise außerhalb des Hochvakuumbereichs angeordnet sein, sodass diese von außen her kontaktierbar sind, beispielsweise zum Anschluss an mindestens eine Spannungsversorgung und/oder mindestens eine elektrische Steuerung oder elektrische Kontrolleinheit.

Der Begriff "Hochvakuumbereich", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen evakuierten oder evakuierbaren Raum, insbesondere mit einem Druck im Bereich von weniger als 10⁻³ mbar beziehen, insbesondere einem Druck von weniger als 10⁻⁶ mbar, beispielsweise einem Druck von weniger als 10⁻⁹ mbar, typischerweise bis zu 10⁻¹¹ mbar. Wie dem Fachmann bekannt ist, kann ein Druck von 10⁻⁹ mbar beispielsweise mit Hilfe von Turbomolekularpumpen, auch Turbopumpen genannt, erzeugt werden. Als Vorpumpen können beispielsweise Drehschieberpumpen genutzt werden. Für einen Druck von weniger als 10⁻⁹ mbar können weiterführend Ionenpumpen, Titan-Sublimations-Pumpen oder Non Evaporable Getter (NEG) Pumpen eingesetzt werden. Der Hochvakuumbereich kann nach außen zumindest weitestgehend abgedichtet sein, insbesondere bis auf Zugänge für die genannten Pumpen und/oder bis auf elektrische Durchführungen, beispielsweise elektrische Durchführungen, über welche die elektrischen Anschlüsse mit den Elektroden verbunden sind. Insbesondere kann der Zellinnenraum der Zelle zur Durchführung quantenoptischer Messungen zumindest zum Teil ein Hochvakuumbereich sein. Die Zelle kann somit zumindest teilweise hochvakuumtauglich sein.

Wie unten näher beschrieben, kann die Zelle dazu insbesondere mindestens eine Vakuumzelle umfassen. Die Zelle kann zumindest teilweise ausheizbar sein. In der Zelle können mechanische Verbindungen und/oder elektrische Verbindungen und/oder elektrische Isolierungen zumindest weitestgehend, inbesondere vollständig, klebefrei und/oder lötfrei umgesetzt sein. Alle Materialien in der Zelle können extrem niedrige Ausgasraten aufweisen. Beispielsweise können Edelstahl, Marcor, Alumina, Kapton, Wolfram und/oder Quarzgläser mit ITO-Beschichtung und/oder Antireflexbeschichtung verwendet werden. In der Vakuumzelle kann die Kontrolleinheit aufgenommen sein. Die Vakuumszelle kann beispielsweise als Glaszelle ausgebildet sein.

Wie oben ausgeführt, umfasst das optische Fenster mindestens ein transparentes Substrat und mindestens eine transparente elektrische leitfähige Beschichtung des Substrats. Die elektrisch leitfähige Beschichtung kann insbesondere mindestens ein transparentes leitfähiges Oxid (transparent conductive oxide, TCO) umfassen, insbesondere mindestens ein transparentes leitfähiges Oxid ausgewählt aus der Gruppe bestehend aus Zinnoxid und Indium-Zinn-Oxid (ITO). Ein Vorteil derartiger TCOs besteht in deren guten optischen Transparenzeigenschaften und der Herstellbarkeit in hoher elektrischer und optischer Qualität. Insbesondere sind beschichtete Substrate mit ITO in hoher Schichtqualität verfügbar, da diese in der Optoelektronik und der Halbleitertechnik eingesetzt werden. Die Beschichtung kann grundsätzlich eine beliebige Schichtdicke aufweisen, beispielsweise im Bereich von 1 nm bis 50 µm, insbesondere im Bereich von 10 nm bis 2000 nm. Die Beschichtung kann insbesondere mindestens einen Dünnschichtfilm umfassen. Insbesondere kann die Beschichtung eine Schichtdicke im nm-Bereich oder im µm-Bereich aufweisen. Die Beschichtung kann eine Kombination mehrerer übereinanderliegender Schichten umfassen. Insbesondere kann die Beschichtung ausschließlich eine Schicht, beispielsweise eine ITO-Schicht, umfassen. Das Substrat kann mindestens ein Material umfassen, ausgewählt aus der Gruppe bestehend aus Quarzglas und Borosilikatglas, da derartige Gläser in hoher optischer Qualität verfügbar sind. Auch andere Materialien für das Substrat und/oder die Beschichtung sind jedoch grundsätzlich möglich.

Das mindestens eine optische Fenster kann insbesondere eine Transparenz von mindestens 10 %, insbesondere mindestens 80 % und insbesondere mindestens 85 % in einem Wellenlängenbereich von 400 nm bis 900 nm aufweisen, insbesondere in einem Wellenlängenbereich von 300 nm bis 1000 nm. Diese Werte sind insbesondere mit Quarzglas oder Borosilikatglas als Substrat und mit einer entsprechenden ITO-Beschichtung gut erreichbar.

Die elektrisch leitfähige Beschichtung kann zumindest auf eine dem Innenraum zuweisenden Seite des Substrats aufgebracht sein. In direkter Sichtlinie der Atomwolke können insbesondere ausschließlich leitfähige Elemente wie beispielweise die leitfähige Beschichtung verbaut sein. Nicht leitfähige Elemente wie beispielsweise Isolatoren oder Antireflexbeschichtungen können störende elektrische Potentiale, sogenannte patch Potentiale, ausbilden und dadurch die Stabilität des elektrischen Feldes in dem Innenraum reduzieren und sollten daher typischerweise nicht in direkter Sichtlinie der Atomwolke verbaut werden. Das optische Fenster kann mindestens eine Antireflexbeschichtung aufweisen. Die Antireflexbeschichtung kann beispielsweise auf der dem Innenraum abgewandten Seite und/oder als Zwischenschicht zwischen Substrat und leitfähiger Beschichtung angebracht sein.

Zumindest zwei der Elektroden können auf einander gegenüberliegenden Seiten bezüglich des Innenraums angeordnet sein. Damit lässt sich durch eine entsprechende Beaufschlagung mit elektrischen Potenzialen das elektrische Feld in dem Innenraum gut beeinflussen. Insbesondere können mindestens zwei Elektrodenpaare vorgesehen sein, wobei die mindestens zwei Elektrodenpaare derart angeordnet sind, dass sich Verbindungslinien zwischen den Elektroden der Paare in dem Innenraum, vorzugsweise an dem Ort der Atomwolke, kreuzen. Auf diese Weise lässt sich ein elektrisches Feld in mindestens zwei Raumrichtungen oder Dimensionen in dem Innenraum beeinflussen. Insbesondere können mindestens drei Elektrodenpaare vorgesehen sein, wobei sich die Verbindungslinien der Elektroden der Elektrodenpaare vorzugsweise in einem Punkt in dem Innenraum kreuzen.

Das Gehäuse kann, wie auch oben ausgeführt, mindestens eine Öffnung aufweisen. Das optische Fenster kann derart mechanisch mit dem Gehäuse verbunden sein, dass der Lichtstrahl durch das optische Fenster und durch die Öffnung in den Innenraum einstrahlbar ist. Beispielsweise kann das optische Fenster mit Hilfe der Halteeinheit mit dem Gehäuse verbunden sein. Die Öffnung kann mindestens eine Wand des Gehäuses durchdringen und sich beispielsweise in Richtung des Innenraums konisch verjüngen. Auch andere Geometrien und Ausführungsformen sind möglich.

Die Elektroden können mindestens zwei optische Fenster aufweisen, insbesondere mindestens drei optische Fenster. Die optischen Fenster können derart angeordnet sein, dass mehrere Lichtstrahlen aus unterschiedlichen Richtungen durch die optischen Fenster in den Innenraum einstrahlbar sind. Insbesondere können die optischen Fenster derart angeordnet sein, dass mehrere Lichtstrahlen aus unterschiedlichen Richtungen durch die optischen Fenster in den Innenraum einstrahlbar sind, wobei jeweils ein Lichtstrahl durch jeweils ein optisches Fenster eingestrahlt wird. Dementsprechend können die optischen Fenster an unterschiedlichen Wänden des Gehäuses, beispielsweise an gegenüberliegenden Wänden des Gehäuses, angeordnet sein. Auch andere Ausführungsformen sind möglich. Insbesondere können die Elektroden so in das Gehäuse integriert sein oder durch das Gehäuse gebildet werden, dass ein Faraday-Käfig entsteht, mittels dessen ein elektrisches Feld in dem Innenraum in mindestens einer, bevorzugt in mindestens zwei, vorzugsweise in drei Dimensionen abgeschirmt wird oder, durch Beaufschlagung der Elektroden mit entsprechenden elektrischen Potenzialen, beeinflussbar ist. So können insbesondere die Elektroden räumlich derart zu dem Innenraum angeordnet sein, dass Feldkomponenten des elektrischen Feldes in dem Innenraum in mindestens einer Raumrichtung, bevorzugt in mindestens zwei Raumrichtungen, insbesondere in drei Raumrichtungen, mittels der Elektroden beeinflussbar sind. Die Anordnung und/oder die Geometrie der Elektroden kann insbesondere derart sein, dass in dem Innenraum ein homogenes elektrische Feld erzeugt wird. Die Kontrolleinheit kann beispielsweise sechs individuell ansteuerbare Elektroden umfassen. Die Elektrodengröße oder Elektrodenfläche kann typischerweise einige cm² betragen, beispielsweise 0.5 cm² bis 100 cm², insbesondere 1 cm² bis 50 cm². Die Abstände zwischen den Elektroden können typischerweise einige mm betragen, beispielsweise 0.5 mm bis 200 mm, insbesondere 1 mm bis 100 mm.

Die Kontrolleinheit kann weiterhin mindestens einen Ionendetektor umfassen. Der Ionendetektor kann zwischen den Elektroden und der Zellwand angeordnet sein. Der Ionendetektor kann insbesondere eingerichtet sein, um Rydberg-Atome nach erfolgter Ionisierung zu detektieren. Der Ionendetektor kann weiterhin eingerichtet sein, um Rydberg-Atome auf Einzelteilchenniveau mit einer zeitlichen Auflösung auf der ns-Skala zu detektieren.

Das Gehäuse kann zumindest teilweise aus mindestens einem elektrisch leitfähigen Material hergestellt sein. Insbesondere kann das Gehäuse zumindest teilweise aus mindestens einem metallischen Material hergestellt sein, beispielsweise aus Edelstahl. So kann das Gehäuse beispielsweise Wände aufweisen, welche ganz oder teilweise aus Metall hergestellt sind. Das Gehäuse kann beispielsweise ein oder mehrere metallische Segmente aufweisen, welche als Elektroden fungieren, zusätzlich zu dem mindestens einen optischen Fenster. Sind mehrere Elektrodensegmente vorgesehen, so können diese gegeneinander elektrisch isoliert sein, damit diese separat und unabhängig mit elektrischen Potenzialen beaufschlagbar sein können. So können beispielsweise in dem Gehäuse mehrere Wände als Elektrodensegmente ausgestaltet sein.

Die Elektroden können, zusätzlich zu dem mindestens einen optischen Fenster, weiterhin mindestens eine nicht-transparente Elektrode aufweisen. Die mindestens eine nicht-transparente Elektrode kann, wie oben ausgeführt, insbesondere aus mindestens einem elektrisch leitfähigen Material hergestellt sein und zumindest teilweise in das Gehäuse integriert sein. Die nicht-transparente Elektrode kann zumindest teilweise in eine Wand des Gehäuses integriert sein oder durch mindestens eine Wand des Gehäuses gebildet werden. Beispielsweise kann die mindestens eine nicht-transparente Elektrode durch mindestens ein Elektrodensegment des Gehäuses gebildet werden. Die nicht-transparente Elektrode kann zumindest teilweise aus Edelstahl hergestellt sein, insbesondere als Edelstahlplatte. Sind mehrere derartiger Elektrodensegmente vorgesehen, so können diese beispielsweise in unterschiedlichen Wänden des Gehäuses angeordnet und gegeneinander elektrisch isoliert sein.

Die Zelle kann weiterhin mindestens eine Vakuumzelle umfassen. Das Gehäuse und die Elektroden können in die Vakuumzelle eingebracht sein. Der Begriff "Vakuumzelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Zelle beziehen, die dafür eingerichtet ist ein Vakuum, insbesondere ein Hochvakuum, bevorzugt ein Ultrahochvakuum, zu umschließen, einzuschließen und/oder zu speichern. Die Vakuumzelle kann insbesondere den Hochvakuumbereich umschließen. Die Vakuumzelle kann zumindest eine Innenwand umfassen. Dementsprechend kann der Hochvakuumbereich beispielsweise durch die Innenwand der Vakuumzelle nach außen zumindest weitestgehend abgedichtet sein. Die Vakuumzelle kann ganz oder teilweise aus mindestens einem optisch transparenten Material hergestellt sein, beispielsweise aus Glas und/oder aus Quarz. Dementsprechend kann die Innenwand der Vakuumzelle ganz oder teilweise aus Glas bestehen. Andere Ausführungsformen sind ebenso möglich.

Das optische Fenster kann zumindest teilweise zwischen dem Gehäuse und mindestens einer Innenwand der Vakuumzelle fixiert sein. Das optische Fenster kann zumindest teilweise in mindestens einer Halterung aufgenommen sein. Die Halterung kann durch mindestens ein an dem Gehäuse gelagertes Federelement gegen die Innenwand der Vakuumzelle gepresst werden. Auf diese Weise können beispielsweise ein wohldefinierter Abstand und/oder eine wohl definierte Orientierung zwischen der Innenwand der Vakuumzelle und dem optischen Fenster hergestellt werden. Das optische Fenster kann insbesondere planparallel zu der Innenwand der Vakuumzelle fixiert sein. Auf diese Weise, kann das optische Fenster auf die Innenwand der Vakuumzelle referenziert werden und Verkippungen können minimal gehalten werden. Im Allgemeinen können bereits geringe Verkippungen von Glaselementen im Strahlengang, insbesondere bei optischer Mikroskopie am Beugungslimit, größere Abbildungsfehler erzeugen, die auf diese Weise vermieden werden können. Die Halterung kann die oben beschriebene Halteeinheit zumindest teilweise umfassen. Die Halterung kann mindestens eine Klemmhalterung, insbesondere für das optische Fenster, und/oder mindestens einen Abstandshalter, insbesondere zu der Innenwand der Vakuumzelle, umfassen. Das Federelement kann die oben beschriebene mechanische Feder und/oder eine Druckfeder sein oder umfassen. Beispielsweise kann das Federelement mindestens eine Schraubendruckfeder umfassen. Beispielsweise kann das Federelement an dem Gehäuse montiert sein. Beispielsweise kann die Halterung an die Innenwand der Vakuumzelle angrenzen. Beispielsweise kann die Halterung zwischen dem Federelement und der Innenwand der Vakuumzelle eingeklemmt sein. Andere Ausführungsformen sind ebenso möglich.

Die Vakuumzelle kann mindestens einen Flansch zum Anschluss an eine Hochvakuumeinrichtung aufweisen, insbesondere eine Hochvakuumeinrichtung mit beispielsweise mindestens einer Turbopumpe, einer Ionenpumpe, einer Titan-Sublimations-Pumpe und/oder einer Non Evaporable Getter (NEG) Pumpe. Der Begriff "Hochvakuumeinrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine prinzipiell beliebige Vorrichtung beziehen, welche dazu eingerichtet ist ein Hochvakuum zu erzeugen. Die Hochvakuumeinrichtung kann mindestens eine Vakuumpumpe umfassen. Insbesondere kann die Hochvakuumeinrichtung mindestens eine Vorvakuumpumpe, beispielsweise eine Drehschieberpumpe, umfassen. Weiter kann die Hochvakuumeinrichtung eine Hochvakuumpumpe, beispielsweise eine Turbomolekularpumpe, auch Turbopumpe genannt, umfassen. Weiter kann die Hochvakuumeinrichtung mindestens eine Ionenpumpe, eine Titan-Sublimations-Pumpe und/oder eine Non Evaporable Getter (NEG) Pumpe umfassen. Weiter kann die Hochvakuumeinrichtung Zugänge zu den Vakuumpumpen, beispielsweise Schläuche, umfassen. Verbindungen zwischen Elementen der Vakuumzelle und/oder der Hochvakuumeinrichtung können UHV-tauglich sein. Eine Verbindung zwischen Edelstahl-Elementen kann beispielsweise mindestens ein CF-Flange-System umfassen. Eine Verbindung zwischen Glas-Elementen oder eine Verbindung zwischen einem Glas-Element und einem Metall-Element kann beispielsweise mindestens eine optische Kontaktierung, einen UHV-tauglichen Kleber und/oder einen Glas-Metall-Übergang umfassen. Die Hochvakuumeinrichtung kann dazu eingerichtet sein, um zunächst mit der Vorvakuumpumpe ein Vorvakuum zu erzeugen und dann mit der Hochvakuumpumpe ein Hochvakuum zu erzeugen, insbesondere in dem Hochvakuumbereich und/oder in der Vakuumzelle. Die Hochvakuumeinrichtung kann eine Steuerung umfassen, welche insbesondere zur Steuerung der Vakuumpumpen und/oder zur Überwachung des erzeugten Vakuums eingerichtet ist. Die Hochvakuumeinrichtung kann mindestens ein Druckmessgerät, beispielsweise ein mechanisches Rohrfeder-Manometer und/oder ein Ionisationsvakuummeter umfassen.

Die Vakuumzelle kann zumindest teilweise als transparente Vakuumzelle ausgebildet sein, insbesondere als Glaszelle. Die Zelle kann weiterhin mindestens ein Gestänge zum Halten des Gehäuses und der Elektroden umfassen, insbesondere in der Vakuumzelle. Das Gestänge kann aus mindestens einem Metall bestehen. Die Zelle, beziehungsweise die einzelnen Komponenten der Zelle, können entsprechende Aufnahmevorrichtungen für das Gestänge aufweisen, beispielsweise Bohrungen. Die Zelle kann Elektrodenzuleitungen zum elektrischen Kontaktieren der Elektroden umfassen. Die Elektrodenzuleitungen können zumindest teilweise in das Gestänge integriert sein.

In einem weiteren Aspekt der vorliegenden Erfindung wird ein System zur Durchführung quantenoptischer Messungen an mindestens einer Atomwolke vorgeschlagen. Das System umfasst mindestens eine Zelle nach einer der vorhergehenden und/oder nachfolgenden eine Zelle betreffenden Ausführungsformen. Das System umfasst weiterhin mindestens eine einstellbare Spannungsquelle. Die Spannungsquelle ist mit den Elektroden verbunden. Mittels der Spannungsquelle ist das mindestens eine elektrische Feld in dem Innenraum des Gehäuses einstellbar, insbesondere steuerbar.

Der Begriff "System", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung umfassend eine Mehrzahl von interagierenden oder voneinander abhängigen Komponenten oder Elementen beziehen, die ein Ganzes bilden. Die Komponenten können zumindest teilweise zusammenwirken, um mindestens eine gemeinsame Funktion zu erfüllen. Mindestens zwei Komponenten können unabhängig voneinander gehandhabt werden oder sie können verbunden werden oder verbindbar sein.

Der Begriff "einstellbare Spannungsquelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine prinzipiell beliebige elektronische Vorrichtung beziehen, welche dazu eingerichtet ist eine vorgegebene elektrische Spannung und/oder eine vorgegebene elektrische Stromstärke zu erzeugen und/oder zu überwachen. Die einstellbare Spannungsquelle kann zumindest eine Vorrichtung umfassen ausgewählt aus der Gruppe bestehend aus: einem Netzteil; ein elektrischer Generator; ein Spannungsmessgerät; ein Strommessgerät; ein elektrisches Multimeter; eine Source Measure Unit (SMU).

Das System kann weiterhin mindestens eine elektrische Spule zum Erzeugen mindestens eines magnetischen Feldes in dem Innenraum umfassen. Die elektrische Spule kann eingerichtet sein, um ein homogenes Magnetfeld mit einer vorgegebenen magnetische Feldstärke in dem Innenraum zu erzeugen. Beispielsweise kann die mindestens eine Spule ein Spulenpaar umfassen, beispielsweise ein Helmholtz-Spulenpaar.

Das System kann weiterhin mindestens eine Lichtquelle zur Erzeugung mindestens eines Lichtstrahls umfassen, insbesondere mindestens eine Laserquelle. Die Lichtquelle kann derart angeordnet sein, dass der Lichtstrahl durch das mindestens eine optische Fenster zur Wechselwirkung mit der Atomwolke in den Innenraum einstrahlbar ist. Der Lichtstrahl kann insbesondere als optische Pinzette und/oder als Gatterlaser fungieren. Der Lichtstrahl kann zur Laserkühlung der Atomwolke genutzt werden.

Das System kann weiterhin mindestens ein optisches System umfassen. Das optische System kann eingerichtet sein, um den Lichtstrahl mit einer numerischen Apertur von mindestens 0.1 durch das optische Fenster in den Innenraum einzustrahlen. Das optische System kann insbesondere eingerichtet sein, um den Lichtstrahl mit einer numerischen Apertur von 0.1 bis 0.6, oder sogar höher, durch das optische Fenster in den Innenraum einzustrahlen. Der Begriff "optisches System", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein prinzipiell beliebiges System beziehen, welches zumindest ein optisches Element umfasst. Das optische Element kann insbesondere ausgewählt sein aus der Gruppe bestehend aus: eine Linse; eine Blende; ein Spiegel; ein Strahlteiler, eine Verzögerungsplatte. Das optische Element und/oder weitere Elemente des Systems können verstellbar sein. Das optische System kann insbesondere mindestens ein Mikroskop-Objektiv umfassen. Das Mikroskop-Objektiv kann insbesondere außerhalb der Vakuumzelle angebracht sein. Das Mikroskop-Objektiv kann innerhalb der Vakuumzelle angebracht sein. Die Verwendung des Mikroskop-Objektivs statt einer im Vakuum angebrachten Asphäre ist im Allgemeinen für den Einsatz mehrerer fokussierter Laserstrahlen, insbesondere über einen weiten Wellenlängenbereich von 300 nm bis 1000 nm, im Bereich des Quantencomputings von Vorteil. Die Zelle zur Durchführung quantenoptischer Messungen an mindestens einer Atomwolke kann insbesondere dazu eingerichtet sein, Laserstrahlen beugungslimitiert auf hunderte von Nanometer Spotgröße zu fokussieren, beispielsweise 300 nm bei 1µm Strahlradius. Hierdurch können Mikrofallen in einem Quantencomputer erzeugt werden und lokale Gatteroperationen durchgeführt werden.

Das System kann weiterhin mindestens eine mit der Zelle verbundene Atomquelle umfassen. Die Atomquelle kann eingerichtet sein, um Atome, Moleküle oder Ionen der Atomwolke in den Innenraum einzubringen. Insbesondere kann die Atomquelle beheizbar ausgestaltet sein, um einen Vorrat entsprechende Atome, Moleküle oder Ionen mindestens eines Elements oder mindestens einer chemischen Verbindung aufzuhalten. Die Atomquelle kann dazu eingerichtet sein, um einen Atomstrahl zu produzieren. Der Atomstrahl kann beispielsweise mittels Laserkühlung abgebremst werden, was durch einen Zeeman-Slower erreicht werden kann. Andere Methoden wie 2D MOTs sind ebenfalls denkbar.

In einem weiteren Aspekt der vorliegenden Erfindung wird ein Quantencomputer vorgeschlagen. Der Quantencomputer umfasst mindestens ein System nach einer der vorhergehenden und/oder nachfolgenden ein System betreffenden Ausführungsformen. Der Quantencomputer umfasst weiterhin mindestens eine Steuereinheit zum Adressieren und/oder Auslesen von Quantenbits in einer Atomwolke in dem Innenraum. Der Begriff "Steuereinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine prinzipiell beliebige Vorrichtung beziehen, welche dazu eingerichtet ist, um das System zur Durchführung quantenoptischer Messungen an mindestens einer Atomwolke, beziehungsweise mindestens eine seiner Komponenten, anzusteuern und dadurch beispielsweise Quantenoperationen durchzuführen. Insbesondere kann die Steuereinheit eingerichtet sein, um die Lichtquelle anzusteuern. Beispielsweise mit Hilfe von Gatterlasern können Quantenoperationen durchgeführt werden. Der Gatterlaser kann beispielsweise ein Atom anregen und somit ein Quantenbit adressieren.

In einem weiteren Aspekt der vorliegenden Erfindung wird Verfahren zur Durchführung quantenoptischer Messungen an mindestens einer Atomwolke vorgeschlagen. Das Verfahren umfasst die folgenden Schritte:
i. Bereitstellen mindestens eines Systems nach einer der vorhergehenden und/oder der nachfolgenden, ein System betreffenden Ausführungsformen;
ii. Erzeugen zumindest eines Hochvakuums, insbesondere eines Ultrahochvakuums, am Ort der Zelle des Systems, insbesondere in dem Innenraum;
iii. Einbringen mindestens einer Atomwolke in den Innenraum der Zelle;
iv. Einstrahlen mindestens eines Lichtstrahls durch das mindestens eine optische Fenster der Zelle, so dass der Lichtstrahl mit der Atomwolke in dem Innenraum der Zelle wechselwirkt; und
v. Beaufschlagen der Elektroden der Zelle mit elektrischen Potenzialen und Einstellen eines elektrischen Feldes in dem Innenraum mittels der Elektroden.

Hierbei können die Verfahrensschritte in der angegebenen Reihenfolge oder in anderer Reihenfolge durchgeführt werden, wobei einer oder mehrere der Verfahrensschritte zumindest teilweise auch gleichzeitig durchgeführt werden können und wobei einer oder mehrere der Verfahrensschritte mehrfach wiederholt werden können. Darüber hinaus können weitere Verfahrensschritte unabhängig davon, ob sie hier erwähnt werden oder nicht, zusätzlich ausgeführt werden. Für weitere Definitionen und Ausführungsformen des Verfahrens zur Durchführung quantenoptischer Messungen an mindestens einer Atomwolke kann auf die Definitionen und Ausführungsformen des System bzw. der Zelle verwiesen werden.

Unter einem "Hochvakuum" kann dabei insbesondere ein Vakuum mit einem Druck von weniger als 10⁻³ bar verstanden werden, insbesondere einem Druck von weniger als 10⁻⁶ bar oder sogar von weniger als 10⁻⁹ bar. Das Hochvakuum kann insbesondere ein Ultrahochvakuum umfassen.

Die erfindungsgemäßen Vorrichtungen und das erfindungsgemäße Verfahren weisen zahlreiche Vorteile gegenüber bekannten Vorrichtungen und Verfahren auf. Insbesondere erlauben sie es die Leistungsparameter (Key Performence Indicators, KPIs) für Module zur Kontrolle elektrische Felder in Quantencomputern, insbesondere in Rydberg-Quantencomputern, zu steigern und Limitierungen aufgrund der fehlenden Kontrolle elektrischer Felder zu eliminieren. So können elektrische Streufelder auf ein Niveau unter 1 mV/cm abgeschirmt werden. Weiterhin kann eine dreidimensionale Kontrolle des elektrischen Feldvektors im Bereich 1 µV/cm bis 1 kV/cm mit zeitlicher Kontrolle auf der 10 ns Skala ermöglicht werden. Weiterhin kann ein optischer Zugang über einen weiten Wellenlängenbereich von 300 nm bis 1500 nm ermöglicht werden. Weiterhin kann eine high-NA optische Qubit-Kontrolle und Qubit-Adressierung am Beugungslimit über einen Wellenlängenbereich von 300 nm bis 1000 nm bei hoher numerischer Apertur (NA = 0.1 bis 0.6 oder höher) ermöglicht werden. Weiterhin kann das Modul Ultrahoch-Vakuum-integrierbar und Ultrahoch-Vakuum-kompatibel (Druck < 10⁻¹¹ mbar) sein.

Zusammenfassend werden, ohne Beschränkung weiterer möglicher Ausgestaltungen, folgende Ausführungsformen vorgeschlagen:
Ausführungsform 1: Zelle zur Durchführung quantenoptischer Messungen an mindestens einer Atomwolke, insbesondere zum Einsatz in einem Quantencomputer, umfassend eine Kontrolleinheit zur Kontrolle elektrischer Felder am Ort der Atomwolke, wobei die Kontrolleinheit umfasst:
   - mindestens ein Gehäuse mit mindestens einem Innenraum zur Aufnahme der Atomwolke und mit mindestens einer Öffnung zum Einbringen der Atome der Atomwolke in den Innenraum; und
   - mindestens zwei Elektroden,
      ∘ wobei die Elektroden unabhängig voneinander mit elektrischen Potenzialen beaufschlagbar sind und eingerichtet sind, um mindestens ein elektrisches Feld in dem Innenraum zu beeinflussen,
      ∘ wobei die Elektroden mechanisch mit dem Gehäuse verbunden sind,
      ∘ wobei mindestens eine der Elektroden zumindest teilweise durch mindestens ein optisches Fenster gebildet wird, durch welches mindestens ein Lichtstrahl zur Wechselwirkung mit der Atomwolke in den Innenraum einstrahlbar ist, wobei das optische Fenster mindestens ein transparentes Substrat und mindestens eine transparente elektrisch leitfähige Beschichtung des Substrats umfasst.
Ausführungsform 2: Zelle nach der vorhergehenden Ausführungsform, wobei die mindestens eine Elektrode mit dem mindestens einen optischen Fenster zumindest teilweise als metallische Platte mit mindestens einer Öffnung ausgebildet ist, insbesondere als Edelstahlplatte, wobei das optische Fenster die Öffnung zumindest teilweise überdeckt.
Ausführungsform 3: Zelle nach einer der vorhergehenden Ausführungsformen, wobei die mindestens eine Elektrode mit dem mindestens einen optischen Fenster mindestens eine Halteeinheit umfasst, wobei die Halteeinheit eingerichtet ist, um das optische Fenster zu halten, wobei die Halteeinheit weiterhin eingerichtet ist, um die transparente elektrisch leitfähige Beschichtung elektrisch zu kontaktieren.
Ausführungsform 4: Zelle nach der vorhergehenden Ausführungsform, wobei die Halteeinheit eingerichtet ist, um das optische Fenster in einer Klemmhalterung zu halten, wobei die Klemmhalterung mindestens ein elektrisch leitfähiges Element aufweist, welches auf die transparente elektrisch leitfähige Beschichtung gepresst wird.
Ausführungsform 5: Zelle nach einer der beiden vorhergehenden Ausführungsformen, wobei die Halteeinheit in einer der folgenden Weisen eingerichtet ist:
   - die Halteeinheit ist integraler Bestandteil des Gehäuses;
   - die Halteeinheit ist über mindestens ein Verbindungselement, insbesondere über mindestens einen Verbindungsstift, mit dem Gehäuse verbunden.
Ausführungsform 6: Zelle nach einer der vorhergehenden Ausführungsformen, weiterhin umfassend mindestens zwei elektrische Anschlüsse zum Verbinden mit mindestens einer Spannungsquelle, wobei die elektrischen Anschlüsse elektrisch mit den Elektroden verbunden sind.
Ausführungsform 7: Zelle nach der vorhergehenden Ausführungsform, wobei die Zelle einen Hochvakuumbereich aufweist, wobei das Gehäuse und die Elektroden in dem Hochvakuumbereich angeordnet sind, wobei die elektrischen Anschlüsse außerhalb des Hochvakuumbereichs angeordnet sind.
Ausführungsform 8: Zelle nach einer der vorhergehenden Ausführungsformen, wobei die elektrisch leitfähige Beschichtung mindestens ein transparentes leitfähiges Oxid (TCO) umfasst, insbesondere mindestens ein transparentes leitfähiges Oxid ausgewählt aus der Gruppe bestehend aus Zinnoxid und in Indium-Zinn-Oxid (ITO).
Ausführungsform 9: Zelle nach einer der vorhergehenden Ausführungsformen, wobei das Substrat mindestens ein Material umfasst, ausgewählt aus der Gruppe bestehend aus Quarzglas und Borosilikatglas.
Ausführungsform 10: Zelle nach der vorhergehenden Ausführungsform, wobei wobei das mindestens eine optische Fenster eine Transparenz von mindestens 10 %, insbesondere mindestens 80 % und insbesondere mindestens 85 % in einem Wellenlängenbereich von 400 nm bis 900 nm aufweist, insbesondere in einem Wellenlängenbereich von 300 nm bis 1000 nm.
Ausführungsform 11: Zelle nach einer der vorhergehenden Ausführungsformen, wobei die elektrisch leitfähige Beschichtung zumindest auf eine dem Innenraum zuweisenden Seite des Substrats aufgebracht ist.
Ausführungsform 12: Zelle nach einer der vorhergehenden Ausführungsformen, wobei das optische Fenster weiterhin mindestens eine Antireflexbeschichtung aufweist.
Ausführungsform 13: Zelle nach einer der vorhergehenden Ausführungsformen, wobei zumindest zwei der Elektroden auf einander gegenüberliegenden Seiten bezüglich des Innenraums angeordnet sind.
Ausführungsform 14: Zelle nach einer der vorhergehenden Ausführungsformen, wobei das Gehäuse mindestens eine Öffnung aufweist, wobei das optische Fenster derart mechanisch mit dem Gehäuse verbunden ist, dass der Lichtstrahl durch das optische Fenster und durch die Öffnung in den Innenraum einstrahlbar ist.
Ausführungsform 15: Zelle nach der vorhergehenden Ausführungsform, wobei die Öffnung mindestens eine Wand des Gehäuses durchdringt und sich in Richtung des Innenraums konisch verjüngt.
Ausführungsform 16: Zelle nach einer der vorhergehenden Ausführungsformen, wobei die Elektroden mindestens zwei optische Fenster aufweisen, insbesondere mindestens drei optische Fenster.
Ausführungsform 17: Zelle nach der vorhergehenden Ausführungsform, wobei die optischen Fenster derart angeordnet sind, dass mehrere Lichtstrahlen aus unterschiedlichen Richtungen durch die optischen Fenster in den Innenraum einstrahlbar sind.
Ausführungsform 18: Zelle nach einer der vorhergehenden Ausführungsformen, wobei die Elektroden räumlich derart zu dem Innenraum angeordnet sind, dass Feldkomponenten des elektrischen Feldes in dem Innenraum in mindestens einer Raumrichtung, bevorzugt in mindestens zwei Raumrichtungen, insbesondere in drei Raumrichtungen, mittels der Elektroden beeinflussbar sind.
Ausführungsform 19: Zelle nach einer der vorhergehenden Ausführungsformen, wobei das Gehäuse zumindest teilweise aus mindestens einem elektrisch leitfähigen Material hergestellt ist.
Ausführungsform 20: Zelle nach der vorhergehenden Ausführungsform, wobei die Elektroden, zusätzlich zu dem mindestens einen optischen Fenster, weiterhin mindestens eine nicht-transparente Elektrode aufweisen, wobei die mindestens eine nicht-transparente Elektrode aus mindestens einem elektrisch leitfähigen Material hergestellt ist und zumindest teilweise in das Gehäuse integriert ist.
Ausführungsform 21: Zelle nach der vorhergehenden Ausführungsform, wobei die nicht-transparente Elektrode zumindest teilweise in eine Wand des Gehäuses integriert ist.
Ausführungsform 22: Zelle nach einer der beiden vorhergehenden Ausführungsformen, wobei die nicht-transparente Elektrode zumindest teilweise aus Edelstahl hergestellt ist, insbesondere als Edelstahlplatte.
Ausführungsform 23: Zelle nach einer der vorhergehenden Ausführungsformen, weiterhin umfassend mindestens eine Vakuumzelle, wobei das Gehäuse und die Elektroden in die Vakuumzelle eingebracht sind.
Ausführungsform 24: Zelle nach der vorhergehenden Ausführungsform, wobei das optische Fenster zumindest teilweise zwischen dem Gehäuse und mindestens einer Innenwand der Vakuumzelle fixiert ist.
Ausführungsform 25: Zelle nach der vorhergehenden Ausführungsform, wobei das optische Fenster zumindest teilweise in mindestens einer Halterung aufgenommen ist, wobei die Halterung durch mindestens ein an dem Gehäuse gelagertes Federelement gegen die Innenwand der Vakuumzelle gepresst wird.
Ausführungsform 26: Zelle nach einer der drei vorhergehenden Ausführungsformen, wobei die Vakuumzelle mindestens einen Flansch zum Anschluss an eine Hochvakuumeinrichtung aufweist, insbesondere eine Hochvakuumeinrichtung mit mindestens einer Turbopumpe, einer Ionenpumpe, einer Titan-Sublimations-Pumpe und/oder einer Non Evaporable Getter (NEG) Pumpe.
Ausführungsform 27: Zelle nach einer der vier vorhergehenden Ausführungsformen, wobei die Vakuumzelle zumindest teilweise als transparente Vakuumzelle ausgebildet ist, insbesondere als Glaszelle.
Ausführungsform 28: Zelle nach einer der vorhergehenden Ausführungsformen, weiterhin umfassend mindestens ein Gestänge zum Halten des Gehäuses und der Elektroden, insbesondere in der Vakuumzelle.
Ausführungsform 29: Zelle nach der vorhergehenden Ausführungsform, wobei die Zelle Elektrodenzuleitungen zum elektrischen Kontaktieren der Elektroden umfasst, wobei die Elektrodenzuleitungen zumindest teilweise in das Gestänge integriert sind.
Ausführungsform 30: System zur Durchführung quantenoptischer Messungen an mindestens einer Atomwolke, umfassend mindestens eine Zelle nach einer der vorhergehenden Ausführungsformen, weiterhin umfassend mindestens eine einstellbare Spannungsquelle, wobei die Spannungsquelle mit den Elektroden verbunden ist und wobei mittels der Spannungsquelle das mindestens eine elektrische Feld in dem Innenraum des Gehäuses einstellbar ist, insbesondere steuerbar ist.
Ausführungsform 31: System nach der vorhergehenden Ausführungsform, weiterhin umfassend mindestens eine elektrische Spule zum Erzeugen mindestens eines magnetischen Feldes in dem Innenraum.
Ausführungsform 32: System nach einer der beiden vorhergehenden Ausführungsformen, weiterhin umfassend mindestens eine Lichtquelle zur Erzeugung mindestens eines Lichtstrahls, insbesondere mindestens eine Laserquelle, wobei die Lichtquelle derart angeordnet ist, dass der Lichtstrahl durch das mindestens eine optische Fenster zur Wechselwirkung mit der Atomwolke in den Innenraum einstrahlbar ist.
Ausführungsform 33: System nach der vorhergehenden Ausführungsform, weiterhin umfassend mindestens ein optisches System, wobei das optische System eingerichtet ist, um den Lichtstrahl mit einer numerischen Apertur von mindestens 0.1 durch das optische Fenster in den Innenraum einzustrahlen.
Ausführungsform 34: System nach einer der vier vorhergehenden Ausführungsformen, weiterhin umfassend mindestens eine mit der Zelle verbundene Atomquelle, wobei die Atomquelle eingerichtet ist, um Atome der Atomwolke in den Innenraum einzubringen.
Ausführungsform 35: Quantencomputer, umfassend mindestens ein System nach einer der vorhergehenden, ein System betreffenden Ausführungsformen, weiterhin umfassend mindestens eine Steuereinheit zum Adressieren und/oder Auslesen von Quantenbits in einer Atomwolke in dem Innenraum.
Ausführungsform 36: Verfahren zur Durchführung quantenoptischer Messungen an mindestens einer Atomwolke, umfassend die folgenden Schritte:
   i. Bereitstellen mindestens eines Systems nach einer der vorhergehenden, ein System betreffenden Ausführungsformen;
   ii. Erzeugen zumindest eines Hochvakuums, insbesondere eines Ultrahochvakuums, am Ort der Zelle des Systems;
   iii. Einbringen mindestens einer Atomwolke in den Innenraum der Zelle;
   iv. Einstrahlen mindestens eines Lichtstrahls durch das mindestens eine optische Fenster der Zelle, so dass der Lichtstrahl mit der Atomwolke in dem Innenraum der Zelle wechselwirkt; und
   v. Beaufschlagen der Elektroden der Zelle mit elektrischen Potenzialen und Einstellen eines elektrischen Feldes in dem Innenraum mittels der Elektroden.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine perspektivische Darstellung eines Ausführungsbeispiels einer erfindungsgemäßen Zelle zur Durchführung quantenoptischer Messungen an mindestens einer Atomwolke;
- Figur 2: eine Schnittdarstellung des Ausführungsbeispiels gemäß Figur 1;
- Figur 3: eine weitere Schnittdarstellung des Ausführungsbeispiels gemäß Figur 1, mit Schnittebene senkrecht zur Schnittebene in Figur 2;
- Figur 4: eine perspektivische Darstellung eines weiteren Ausführungsbeispiels einer erfindungsgemäßen Zelle zur Durchführung quantenoptischer Messungen an mindestens einer Atomwolke;
- Figur 5: ein Ausführungsbeispiel für eine Kontaktierung von Elektroden des Ausführungsbeispiels der erfindungsgemäßen Zelle gemäß Figur 4;
- Figur 6: eine schematische Darstellung eines Ausführungsbeispiels eines erfindungsgemäßen Systems zur Durchführung quantenoptischer Messungen an mindestens einer Atomwolke;
- Figur 7: eine schematische Darstellung eines Ausführungsbeispiels eines erfindungsgemäßen Quantencomputers; und
- Figur 8: ein Flussdiagramm eines Ausführungsbeispiels eines erfindungsgemäßen Verfahrens zur Durchführung quantenoptischer Messungen an mindestens einer Atomwolke.

### Beschreibung der Ausführungsbeispiele

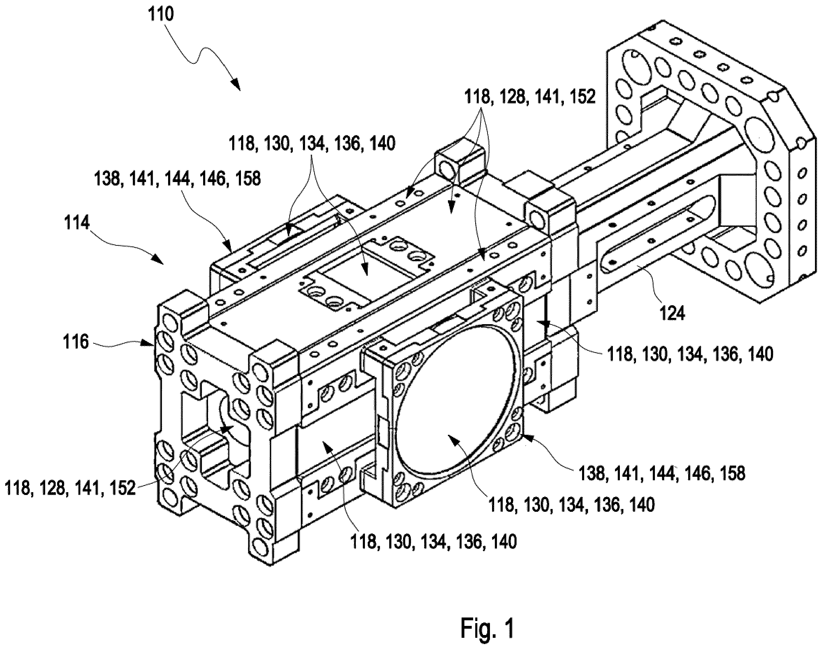

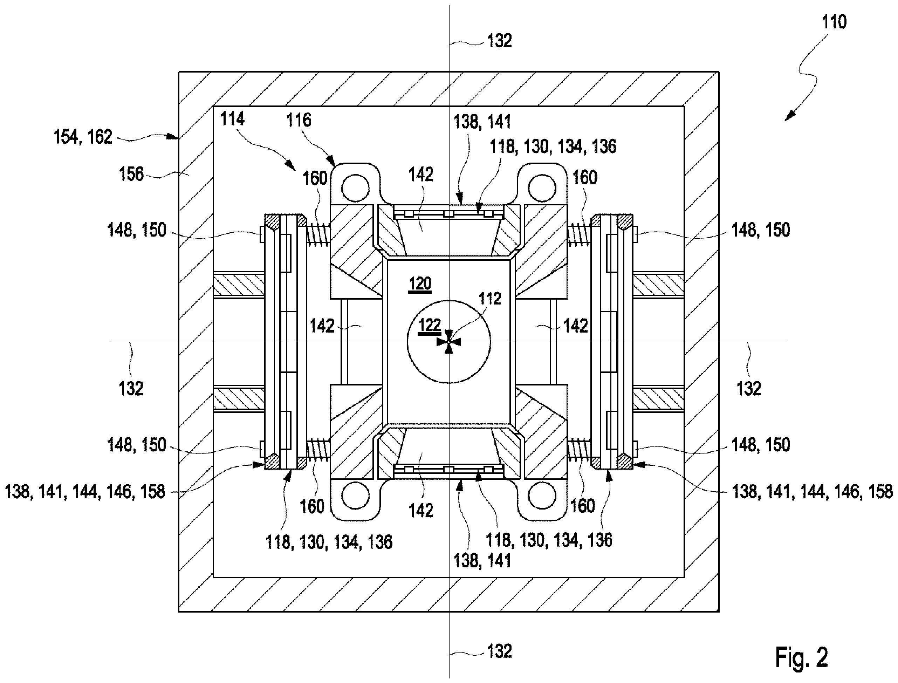

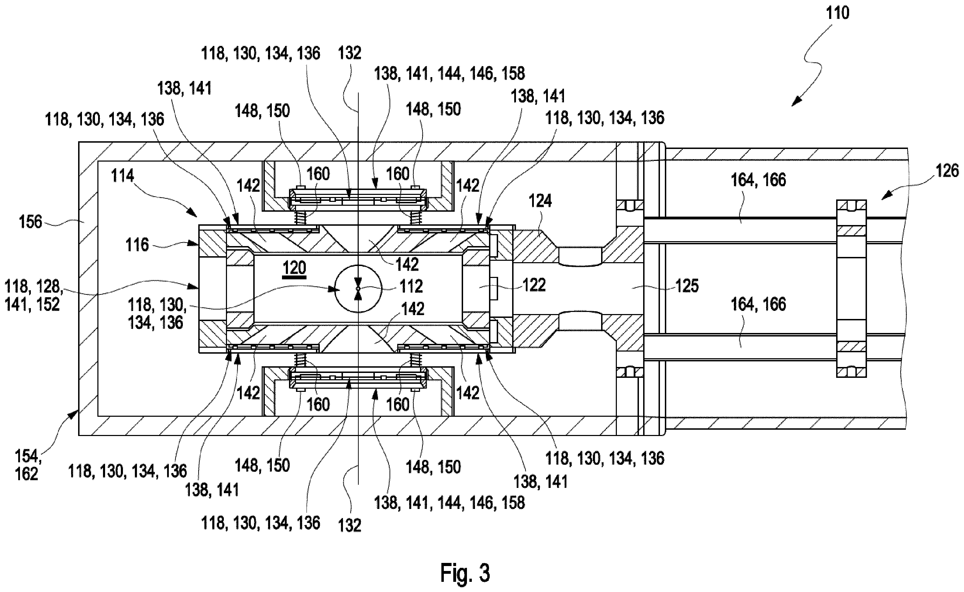

Figur 1 zeigt eine perspektivische Darstellung eines ersten Ausführungsbeispiels einer erfindungsgemäßen Zelle 110 zur Durchführung quantenoptischer Messungen an mindestens einer Atomwolke, deren Ort innerhalb der Zelle 110 in den Figuren symbolisch mit dem Bezugszeichen 112 gekennzeichnet ist. Die Figuren 2 und 3 zeigen ein Schnittdarstellungen des Ausführungsbeispiels gemäß Figur 1. Im Folgenden werden die Figuren 1 bis 3 zusammen beschrieben.

Die Zelle 110 umfasst eine Kontrolleinheit 114 zur Kontrolle elektrischer Felder am Ort 112 der Atomwolke. Die Kontrolleinheit 114 ist Bestandteil der Zelle 110 und stellt eine Vorrichtung dar, welche eingerichtet ist, um elektrische Felder am Ort 112 der Atomwolke innerhalb der Zelle 110 gezielt zu beeinflussen, beispielsweise in mindestens einer Raumrichtung zu erhöhen und/oder zu erniedrigen. Dabei kann die Kontrolleinheit 114 insbesondere auch als Faraday-Käfig wirken und äußere elektrische Felder zumindest weitgehend abschirmen. Die Kontrolleinheit 114 umfasst mindestens ein Gehäuse 116 und mindestens zwei Elektroden 118.

Das Gehäuse 116 umfasst mindestens einen Innenraum 120 zur Aufnahme der Atomwolke. Das Gehäuse 116 umfasst weiter mindestens eine Öffnung 122 zum Einbringen der Atome der Atomwolke in den Innenraum 120. Die Atomwolke kann insbesondere in dem Innenraum 120 der Zelle 110 lokal eingeschränkt sein. Weiterhin können in dem Innenraum 120 quantenoptische Messungen an der Atomwolke vorgenommen werden. Die Zelle 110 kann insbesondere eingerichtet sein, um die in ihr stattfindenden quantenoptischen Messungen gegen die Umgebung außerhalb der Zelle 110 abzuschirmen, beispielsweise gegen äußere mechanische Kräfte wie z.B. Vibrationen, gegen eindringende physikalische Materie wie z.B. Verunreinigungen, gegen elektromagnetische Strahlung, gegen eine Umgebungstemperatur, gegen einen Umgebungsdruck oder gegen eine Kombination zweier oder mehrerer oder aller der genannten Einflüsse.

Die Öffnung 122 zum Einbringen der Atome der Atomwolke in den Innenraum 120 kann beispielsweise eine runde oder anders gestaltete Geometrie aufwiesen. Beispielsweise können durch diese Öffnung 122 Atome aus einer Atomquelle in den Innenraum 120 eingebracht werden. Die Zelle 110 kann zu diesem Zweck beispielsweise, wie nachfolgend noch näher erläutert wird, mit einer Vakuumapparatur gekoppelt werden, die eine Atomquelle umfasst. Die Zelle 110 kann über mindestens ein Verbindungsstück 124 mit weiteren Vorrichtungen verbindbar sein, beispielsweise der Vakuumapparatur mit der Atomquelle. Die Atome der Atomwolke können beispielsweise durch einen Tunnel 125 in dem Verbindungsstück 124 und die Öffnung 122 in den Innenraum 120 eingebracht werden. Das Verbindungsstück 124 und damit auch die Zelle 110 können beispielsweise über mindestens eine Trägerkonstruktion 126 gehalten und/oder verfahren werden, wobei die Trägerkonstruktion 126, wie nachfolgend noch näher ausgeführt, auch für eine elektrische Kontaktierung verwendet werden kann.

Das Gehäuse 116 kann weiterhin zumindest teilweise aus mindestens einem elektrisch leitfähigen Material bestehen, beispielsweise aus Edelstahl. So kann das Gehäuse 116 beispielsweise Wände aufweisen, welche ganz oder teilweise aus Metall hergestellt sind. Das Gehäuse 116 kann beispielsweise ein oder mehrere metallische Segmente 128 aufweisen, welche insbesondere als Elektroden 118 fungieren können. Die metallischen Segmente 128 können gegeneinander elektrisch isoliert sein und dadurch unabhängig voneinander mit elektrischen Potentialen beaufschlagbar sein.

Die Elektroden 118 sind unabhängig voneinander mit elektrischen Potentialen beaufschlagbar. Die Elektroden 118 sind weiterhin eingerichtet, um mindestens ein elektrisches Feld in dem Innenraum 120 zu beeinflussen. Die Elektroden 118 können räumlich derart zu dem Innenraum 120 angeordnet sind, dass Feldkomponenten des elektrischen Feldes in dem Innenraum 120 in mindestens einer Raumrichtung, bevorzugt in mindestens zwei Raumrichtungen, insbesondere in drei Raumrichtungen, mittels der Elektroden 118 beeinflussbar sind. Insbesondere kann die Kontrolleinheit 114 derart ausgestaltet sein, dass, durch das Gehäuse 116 und die mindestens zwei Elektroden 118, ein Faraday-Käfig gebildet wird, über den die Atomwolke in allen drei Raumrichtungen zumindest teilweise gegenüber elektrischen Feldern abgeschirmt wird und/oder über den das elektrische Feld im Innenraum 120 in allen drei Raumrichtungen durch eine entsprechende Beaufschlagung der Elektroden 118 mit elektrischen Potenzialen beeinflussbar ist. Zumindest zwei der Elektroden 118 können auf einander gegenüberliegenden Seiten bezüglich des Innenraums 120 angeordnet sein. Beispielsweise kann die Zelle 110 sechs Elektroden 118 umfassen, welche um den Innenraum 120 verteilt sind und einander paarweise gegenüberliegen. Die Elektroden 118 sind mechanisch mit dem Gehäuse 116 verbunden. Wie erläutert, kann das Gehäuse 116 zumindest einen Teil der Elektroden 118 umfassen. Mit anderen Worten kann zumindest ein Teil der Elektroden 118 in das Gehäuse 114 integriert sein.

Mindestens eine der Elektroden 118 wird zumindest teilweise durch mindestens ein optisches Fenster 130 gebildet. Diese bedeutet, dass diese mindestens eine Elektrode 118 entweder vollständig durch das optische Fenster 130 gebildet wird, oder dass die Elektrode 118 neben dem mindestens einen optischen Fenster 130 eine oder mehrere weitere Komponenten umfasst. Durch das optische Fenster 130 ist mindestens ein Lichtstrahl 132 zur Wechselwirkung mit der Atomwolke in den Innenraum 120 einstrahlbar. Das optische Fenster 130 umfasst mindestens ein transparentes Substrat 134 und mindestens eine transparente elektrisch leitfähige Beschichtung 136 des Substrats 134. Die elektrisch leitfähige Beschichtung 134 kann sich insbesondere flächig über eine Oberfläche des Substrats 134 erstrecken, welche dem Innenraum 120 zugewandt ist. Mit anderen Worten kann die elektrisch leitfähige Beschichtung 136 zumindest auf eine dem Innenraum 120 zuweisenden Seite des Substrats 136 aufgebracht sein. Die elektrisch leitfähige Beschichtung 134 kann mindestens ein transparentes leitfähiges Oxid (TCO) umfassen, insbesondere mindestens ein transparentes leitfähiges Oxid ausgewählt aus der Gruppe bestehend aus Zinnoxid und in Indium-Zinn-Oxid (ITO). Das Substrat 134 kann mindestens ein Material umfassen, ausgewählt aus der Gruppe bestehend aus Quarzglas und Borosilikatglas. Das mindestens eine optische Fenster 130 kann eine Transparenz von mindestens 10 %, insbesondere mindestens 80 % und insbesondere mindestens 85 % in einem Wellenlängenbereich von 400 nm bis 900 nm aufweisen, insbesondere in einem Wellenlängenbereich von 300 nm bis 1000 nm. Das optische Fenster 130 kann weiterhin mindestens eine Antireflexbeschichtung aufweisen. Die Antireflexbeschichtung kann auf der dem Innenraum abgewandten Seite und/oder zwischen der leitfähigen Beschichtung und dem Substrat angebracht sein.

Die mindestens eine Elektrode 118 mit dem mindestens einen optischen Fenster 130 kann zumindest teilweise als metallische Platte 138 mit mindestens einer Öffnung 140 ausgebildet sein, insbesondere als Edelstahlplatte 141. Das optische Fenster 130 kann die Öffnung 140 zumindest teilweise überdecken. Das Gehäuse 116 kann weiterhin mindestens eine Öffnung 142 aufweisen, durch welche der Lichtstrahl 132 in den Innenraum 120 einstrahlbar ist. Das optische Fenster 130 kann derart mechanisch mit dem Gehäuse 116 verbunden sein, dass der Lichtstrahl 132 durch das optische Fenster 130 und durch die Öffnung 142 in den Innenraum 120 einstrahlbar ist. Die Öffnung 142 kann mindestens eine Wand des Gehäuses 116 durchdringen und sich in Richtung des Innenraums 120 konisch verjüngen. Die Elektroden 118 können mindestens zwei optische Fenster 130 aufweisen, insbesondere mindestens drei optische Fenster 130. Die optischen Fenster 130 können derart angeordnet sein, dass mehrere Lichtstrahlen 132 aus unterschiedlichen Richtungen durch die optischen Fenster 130 in den Innenraum 120 einstrahlbar sind.

Die mindestens eine Elektrode 118 mit dem mindestens einen optischen Fenster 130 kann weiterhin mindestens eine Halteeinheit 144 umfassen. Die Halteeinheit 144 kann eingerichtet sein, um das optische Fenster 130 zu halten, insbesondere außerhalb des Innenraums 120 vor der Öffnung 142. Die Halteeinheit 144 kann weiterhin eingerichtet sein, um die transparente elektrisch leitfähige Beschichtung 136 zu kontaktieren. Die Halteeinheit 144 kann dazu mindestens ein elektrisch leitfähiges Element, insbesondere ein Metall, umfassen. Die Halteeinheit 144 kann eine Klemmhalterung 146 umfassen. Die Halteeinheit 144 kann eingerichtet sein, um das optische Fenster 130 in der Klemmhalterung 146 zu halten. Die Klemmhalterung 146 kann mindestens ein elektrisch leitfähiges Element, insbesondere ein Metall, aufweisen, welches auf die transparente elektrisch leitfähige Beschichtung 136 gepresst wird. Insbesondere kann zumindest ein Rand des optische Fensters 130 in der Klemmhalterung 146 eingeklemmt werden, sodass der Lichtstrahl 132 durch einen mittleren Abschnitt des optische Fensters 130 in den Innenraum 120 eingestrahlt werden kann. Die Halteeinheit 144 kann integraler Bestandteil des Gehäuses 116 sein. Alternativ oder zusätzlich kann die Halteeinheit 144 über mindestens ein Verbindungselement 148, insbesondere über mindestens einen Verbindungsstift 150, beispielsweise mittels mechanischer Federn, mit dem Gehäuse 116 verbunden sein.

Die Zelle 110 kann, zusätzlich zu dem mindestens einen optischen Fenster 130, weiterhin mindestens eine nicht-transparente Elektrode 152 aufweisen. Die mindestens eine nicht-transparente Elektrode 152 kann aus mindestens einem elektrisch leitfähigen Material hergestellt sein und zumindest teilweise in das Gehäuse 116 integriert sein. Die nicht-transparente Elektrode 152 kann zumindest teilweise in eine Wand des Gehäuses 116 integriert sein. Die nicht-transparente Elektrode 152 kann zumindest teilweise aus Edelstahl hergestellt sein, insbesondere als Edelstahlplatte 141. Wie bereits angedeutet, kann die nicht-transparente Elektrode 152 zumindest ein metallisches Segment 128 des Gehäuses 116 umfassen.

Die Zelle 110 kann weiterhin zumindest eine Vakuumzelle 154 umfassen. Das Gehäuse 116 und die Elektroden 118 können in die Vakuumzelle 154 eingebracht sein. Mit anderen Worten kann die Vakuumzelle 154 das Gehäuse 116 und die Elektroden 118 umschließen, wie beispielsweise in Figur 2 veranschaulicht. Das optische Fenster 130 kann zumindest teilweise zwischen dem Gehäuse 116 und mindestens einer Innenwand 156 der Vakuumzelle fixiert sein. Das optische Fenster 130 kann zumindest teilweise in mindestens einer Halterung 158 aufgenommen sein. Die Halterung 158 kann durch mindestens ein an dem Gehäuse 116 gelagertes Federelement 160, beispielsweise eine Druckfeder, gegen die Innenwand 156 der Vakuumzelle 154 gepresst werden. Das Federelement 160 kann dazu eingerichtet sein, um die transparente elektrisch leitfähige Beschichtung 136 zu kontaktieren. Die Halterung 158 kann die Halteeinheit 144 oder zumindest Teile der Halteeinheit 144 umfassen, insbesondere die Klemmhalterung 146. Die Vakuumzelle 154 kann zumindest teilweise als transparente Vakuumzelle 154 ausgebildet sein, insbesondere als Glaszelle 162. Die Zelle 110 kann weiterhin mindestens ein Gestänge 164 zum Halten des Gehäuses 116 und der Elektroden 118 umfassen, insbesondere in der Vakuumzelle 154. Das Gestänge 164 kann aus mindestens einem Metall bestehen. Die Zelle 110 kann Elektrodenzuleitungen 166 zum elektrischen Kontaktieren der Elektroden 118 umfassen. Die Elektrodenzuleitungen 166 können zumindest teilweise in das Gestänge 164 integriert sein.

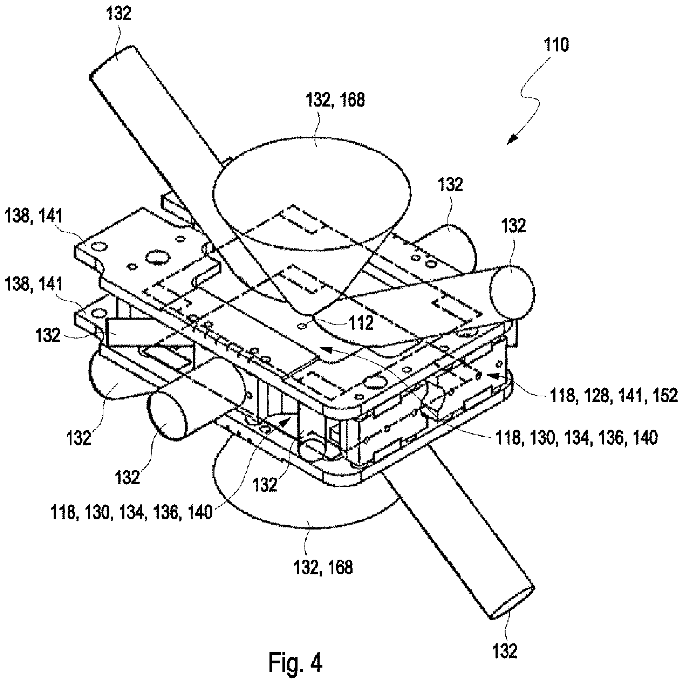

Figur 4 zeigt eine perspektivische Darstellung eines weiteren Ausführungsbeispiels der erfindungsgemäßen Zelle 110 zur Durchführung quantenoptischer Messungen an mindestens einer Atomwolke. Für die Beschreibung von Figur 4 kann in weiten Teilen auf die Beschreibung der Figuren 1 bis 3 zurückgegriffen werden.

Bei dem in Figur 4 gezeigten Ausführungsbeispiel der Zelle 110 sind zwei im Vergleich große optische Fenster 130 an Oberseite und Unterseite der Zelle 110 vorgesehen, durch welche mehrere Lichtstrahlen 132 in den Innenraum 120 einfallen können. Auch Lichtstrahlen 168 mit hoher numerischer Apparatur können durch diese optischen Fenster 130 eingestrahlt werden. Die Atomwolke befindet sich in Figur 4 mittig im Innenraum 120 der Zelle 110, was erneut mit dem Bezugszeichen 112 angedeutet wird.

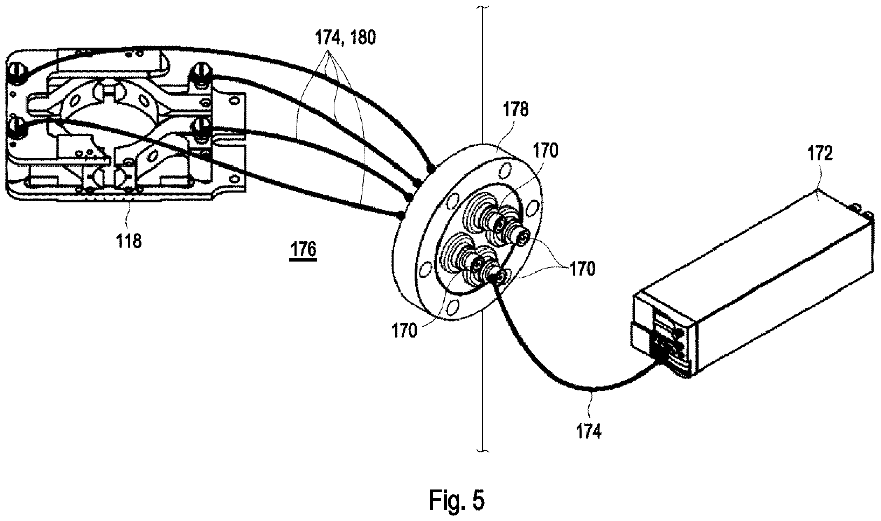

Figur 5 zeigt ein Ausführungsbeispiel für eine Kontaktierung von Elektroden 118 des Ausführungsbeispiels der erfindungsgemäßen Zelle 110 gemäß Figur 4, welche jedoch auch analog auf das Ausführungsbeispiel der Figuren 1-3 übertragbar ist. Die Zelle 110 kann allgemein mindestens zwei elektrische Anschlüsse 170 zum Verbinden mit mindestens einer Spannungsquelle 172 umfassen. Die elektrischen Anschlüsse 170 können elektrisch mit den Elektroden 118 verbunden sein, beispielsweise über Kabelverbindungen 174. Wie bereits angedeutet, kann die Zelle 110 einen Hochvakuumbereich 176 aufweisen. Das Gehäuse 116 und die Elektroden 118 können in dem Hochvakuumbereich 176 angeordnet sein. Die elektrischen Anschlüsse 170 können außerhalb des Hochvakuumbereichs 176 angeordnet sein, beispielsweise an einer Hochvakuumdurchführung 178. In dem Hochvakuumbereich können hochvakuumkompatible Kabelverbindungen 180 verwendet werden, welche beispielsweise mit Kaptonisolierungen versehen sein können. Die Kabelverbindungen 180 können beispielsweise ganz oder teilweise in einem Verbindungsstück, wie beispielsweise dem oben gezeigten Verbindungsstück 124, und/oder in einer Trägerkonstruktion, wie beispielsweise der oben gezeigten Trägerkonstruktion 126, geführt oder integriert sein.

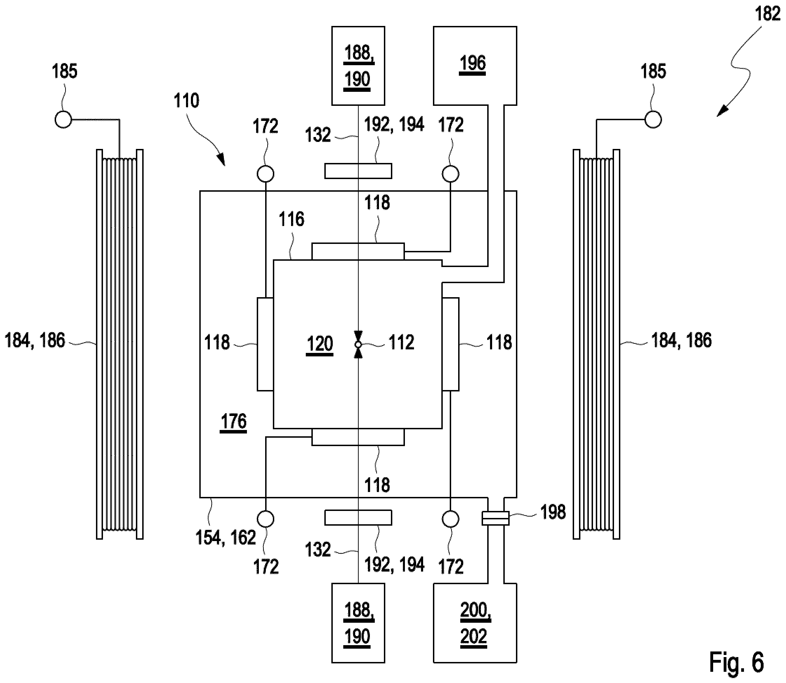

Figur 6 zeigt eine schematische Darstellung eines Ausführungsbeispiels eines erfindungsgemäßen Systems 182 zur Durchführung quantenoptischer Messungen an mindestens einer Atomwolke. Das System 182 umfasst mindestens eine Zelle 110 nach einer der vorhergehendend oder nachfolgend beschriebenen Ausführungsformen. Das System 182 umfasst weiterhin mindestens eine einstellbare Spannungsquelle 172. Die Spannungsquelle 172 ist mit den Elektroden 118 verbunden. Mittels der Spannungsquelle 172 ist das mindestens eine elektrische Feld in dem Innenraum 120 des Gehäuses 116 einstellbar, insbesondere steuerbar. Das System 182 kann weiterhin mindestens eine elektrische Spule 184 zum Erzeugen mindestens eines magnetischen Feldes in dem Innenraum 120 umfassen. Die elektrische Spule 184 kann an mindestens eine Stromquelle 185 angeschlossen werden. Insbesondere kann die elektrische Spule 184 eine Helmholzspule 186 umfassen. So kann beispielsweise ein um die Zelle 110 angeordnetes Paar aus Helmholzspulen 186 verwendet werden.

Das System 182 kann weiterhin mindestens eine Lichtquelle 188 zur Erzeugung des mindestens einen Lichtstrahls 132 umfassen, insbesondere mindestens eine Laserquelle 190. Die Lichtquelle 188 kann derart angeordnet sein, dass der Lichtstrahl 132 durch das mindestens eine optische Fenster 130 zur Wechselwirkung mit der Atomwolke in den Innenraum 120 einstrahlbar ist. Der Lichtstrahl 132 kann insbesondere als optische Pinzette und/oder als Gatterlaser fungieren.

Das System 182 kann weiterhin mindestens ein optisches System 192 umfassen. Das optische System 192 kann eingerichtet sein, um den Lichtstrahl 132 mit einer numerischen Apertur von mindestens 0.1 durch das optische Fenster 130 in den Innenraum 120 einzustrahlen. Das optische System 192 kann insbesondere mindestens ein Mikroskop-Objektiv 194 umfassen. Das System 182 kann weiterhin mindestens eine mit der Zelle 110 verbundene Atomquelle 196 umfassen. Die Atomquelle 196 kann eingerichtet sein, um Atome, Moleküle oder Ionen der Atomwolke in den Innenraum 120 einzubringen. Insbesondere kann die Atomquelle 196 beheizbar ausgestaltet sein, z.B. in einer Effusionszelle. Wie in Figur 6 gezeigt, kann die Vakuumzelle 154 mindestens einen Flansch 198 zum Anschluss an eine Hochvakuumeinrichtung 200 aufweisen, insbesondere eine Hochvakuumeinrichtung 200 mit mindestens einer Vakuumpumpe 202, beispielsweise einer Turbopumpe, einer Ionenpumpe, einer Titan-Sublimations-Pumpe und/oder einer Non Evaporable Getter (NEG) Pumpe.

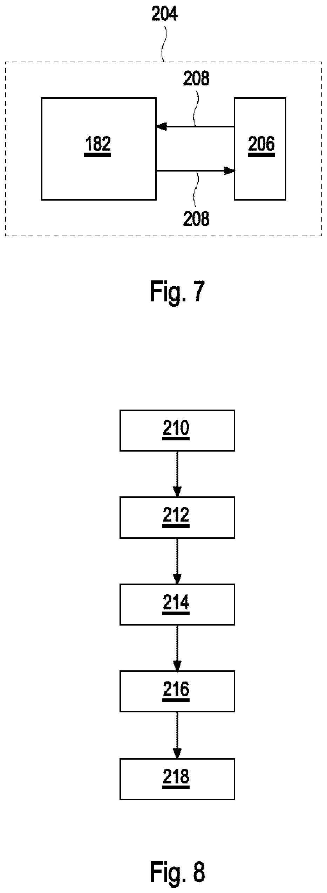

Figur 7 zeigt eine schematische Darstellung eines Ausführungsbeispiels eines erfindungsgemäßen Quantencomputers 204. Der Quantencomputer 204 umfasst mindestens ein System 182 nach einer der vorhergehend oder nachfolgend beschriebenen Ausführungsformen, welche ein System 182 betreffen. Der Quantencomputer 204 umfasst weiterhin mindestens eine Steuereinheit 206 zum Adressieren und/oder Auslesen von Quantenbits in einer Atomwolke in dem Innenraum 120. Der Quantencomputer 204 kann weiterhin mindestens eine Schnittstelle 208 umfassen, welche eingerichtet ist eine Kommunikation zwischen Steuereinheit 206 und System 182 zu ermöglichen. Zusätzlich kann die Schnittstelle 208 eingerichtet sein eine Kommunikation mit externen Vorrichtungen zu ermöglichen.

Figur 8 zeigt ein Flussdiagramm eines Ausführungsbeispiels eines erfindungsgemäßen Verfahrens zur Durchführung quantenoptischer Messungen an mindestens einer Atomwolke. Das Verfahren umfasst die folgenden Schritte:
i. (gekennzeichnet durch Bezugszeichen 210) Bereitstellen mindestens eines Systems 182 nach einer der vorhergehend oder nachfolgend beschriebenen, ein System betreffenden Ausführungsformen;
ii. (gekennzeichnet durch Bezugszeichen 212) Erzeugen zumindest eines Hochvakuums, insbesondere eines Ultrahochvakuums, am Ort der Zelle 110 des Systems 182, insbesondere in dem Innenraum 120;
iii. (gekennzeichnet durch Bezugszeichen 214) Einbringen mindestens einer Atomwolke in den Innenraum 120 der Zelle 110;
iv. (gekennzeichnet durch Bezugszeichen 216) Einstrahlen mindestens eines Lichtstrahls 132 durch das mindestens eine optische Fenster 130 der Zelle 110, so dass der Lichtstrahl 132 mit der Atomwolke in dem Innenraum 120 der Zelle 110 wechselwirkt; und
v. (gekennzeichnet durch Bezugszeichen 218) Beaufschlagen der Elektroden 118 der Zelle 110 mit elektrischen Potenzialen und Einstellen eines elektrischen Feldes in dem Innenraum 120 mittels der Elektroden 118.

Hierbei können die Verfahrensschritte in der angegebenen Reihenfolge oder in anderer Reihenfolge durchgeführt werden, wobei einer oder mehrere der Verfahrensschritte zumindest teilweise auch gleichzeitig durchgeführt werden können und wobei einer oder mehrere der Verfahrensschritte mehrfach wiederholt werden können. Darüber hinaus können weitere Verfahrensschritte unabhängig davon, ob sie hier erwähnt werden oder nicht, zusätzlich ausgeführt werden.

### Bezugszeichenliste

- 110: Zelle
- 112: Ort der Atomwolke
- 114: Kontrolleinheit
- 116: Gehäuse
- 118: Elektrode
- 120: Innenraum
- 122: Öffnung des Gehäuses zum Einbringen der Atome
- 124: Verbindungsstück
- 125: Tunnel
- 126: Trägerkonstruktion
- 128: Metallisches Segment
- 130: Optisches Fenster
- 132: Lichtstrahl
- 134: Substrat
- 136: Elektrisch leitfähige Beschichtung
- 138: Metallische Platte
- 140: Öffnung der metallischen Platte
- 141: Edelstahlplatte
- 142: Öffnung des Gehäuses zum Einstrahlen des Lichtstrahls
- 144: Halteeinheit
- 146: Klemmhalterung
- 148: Verbindungselement
- 150: Verbindungsstift
- 152: Nicht-transparente Elektrode
- 154: Vakuumzelle
- 156: Innenwand der Vakuumzelle
- 158: Halterung
- 160: Federelement
- 162: Glaszelle
- 164: Gestänge
- 166: Elektrodenzuleitungen
- 168: Lichtstrahl mit hoher numerischer Apertur
- 170: Elektrischer Anschluss
- 172: Spannungsquelle
- 174: Kabelverbindung
- 176: Hochvakuumbereich
- 178: Hochvakuumdurchführung
- 180: Hochvakuumkompatible Kabelverbindung
- 182: System
- 184: Elektrische Spule
- 185: Stromquelle
- 186: Helmholzspule
- 188: Lichtquelle
- 190: Laserquelle
- 192: Optisches System
- 194: Mikroskop-Objektiv
- 196: Atomquelle
- 198: Flansch
- 200: Hochvakuumeinrichtung
- 202: Vakuumpumpe
- 204: Quantencomputer
- 206: Steuereinheit
- 208: Schnittstelle
- 210: Verfahrensschritt i.
- 212: Verfahrensschritt ii.
- 214: Verfahrensschritt iii.
- 216: Verfahrensschritt iv.
- 218: Verfahrensschritt v.

## Patentansprüche

1. Zelle (110) zur Durchführung quantenoptischer Messungen an mindestens einer Atomwolke, umfassend eine Kontrolleinheit (114) zur Kontrolle elektrischer Felder am Ort (112) der Atomwolke, wobei die Kontrolleinheit (114) umfasst:
- mindestens ein Gehäuse (116) mit mindestens einem Innenraum (120) zur Aufnahme der Atomwolke und mit mindestens einer Öffnung (122) zum Einbringen der Atome der Atomwolke in den Innenraum (120); und
- mindestens zwei Elektroden (118),
∘ wobei die Elektroden (118) unabhängig voneinander mit elektrischen Potenzialen beaufschlagbar sind und eingerichtet sind, um mindestens ein elektrisches Feld in dem Innenraum (120) zu beeinflussen,
∘ wobei die Elektroden (118) mechanisch mit dem Gehäuse (116) verbunden sind,
∘ wobei mindestens eine der Elektroden (118) zumindest teilweise durch mindestens ein optisches Fenster (130) gebildet wird, durch welches mindestens ein Lichtstrahl (132) zur Wechselwirkung mit der Atomwolke in den Innenraum (120) einstrahlbar ist, wobei das optische Fenster (130) mindestens ein transparentes Substrat (134) und mindestens eine transparente elektrisch leitfähige Beschichtung (136) des Substrats (134) umfasst.

2. Zelle (110) nach dem vorhergehenden Anspruch, wobei die mindestens eine Elektrode (118) mit dem mindestens einen optischen Fenster (130) mindestens eine Halteeinheit (144) umfasst, wobei die Halteeinheit (144) eingerichtet ist, um das optische Fenster (130) zu halten, wobei die Halteeinheit (144) weiterhin eingerichtet ist, um die transparente elektrisch leitfähige Beschichtung (136) elektrisch zu kontaktieren.

3. Zelle (110) nach dem vorhergehenden Anspruch, wobei die Halteeinheit (144) eingerichtet ist, um das optische Fenster (130) in einer Klemmhalterung (146) zu halten, wobei die Klemmhalterung (146) mindestens ein elektrisch leitfähiges Element aufweist, welches auf die transparente elektrisch leitfähige Beschichtung (136) gepresst wird.

4. Zelle (110) nach einem der vorhergehenden Ansprüche, weiterhin umfassend mindestens zwei elektrische Anschlüsse (170) zum Verbinden mit mindestens einer Spannungsquelle (172), wobei die elektrischen Anschlüsse (170) elektrisch mit den Elektroden (118) verbunden sind.

5. Zelle (110) nach einem der vorhergehenden Ansprüche, wobei die elektrisch leitfähige Beschichtung (136) mindestens ein transparentes leitfähiges Oxid (TCO) umfasst.

6. Zelle (110) nach einem der vorhergehenden Ansprüche, wobei das Substrat (134) mindestens ein Material umfasst, ausgewählt aus der Gruppe bestehend aus Quarzglas und Borosilikatglas.

7. Zelle (110) nach einem der vorhergehenden Ansprüche, wobei die Elektroden (118) mindestens zwei optische Fenster (130) aufweisen, wobei die optischen Fenster (130) derart angeordnet sind, dass mehrere Lichtstrahlen (132) aus unterschiedlichen Richtungen durch die optischen Fenster (130) in den Innenraum (120) einstrahlbar sind.

8. Zelle (110) nach einem der vorhergehenden Ansprüche, wobei das Gehäuse (116) zumindest teilweise aus mindestens einem elektrisch leitfähigen Material hergestellt ist.

9. Zelle (110) nach dem vorhergehenden Anspruch, wobei die Elektroden (118), zusätzlich zu dem mindestens einen optischen Fenster (130), weiterhin mindestens eine nicht-transparente Elektrode (152) aufweisen, wobei die mindestens eine nicht-transparente Elektrode (152) aus mindestens einem elektrisch leitfähigen Material hergestellt ist und zumindest teilweise in das Gehäuse (116) integriert ist.

10. Zelle (110) nach einem der vorhergehenden Ansprüche, weiterhin umfassend mindestens eine Vakuumzelle (154), wobei das Gehäuse (116) und die Elektroden (118) in die Vakuumzelle (154) eingebracht sind, wobei die Vakuumzelle (154) mindestens einen Flansch (198) zum Anschluss an eine Hochvakuumeinrichtung (200) aufweist.

11. Zelle (110) nach dem vorhergehenden Anspruch, wobei das optische Fenster (130) zumindest teilweise zwischen dem Gehäuse (116) und mindestens einer Innenwand (120) der Vakuumzelle (154) fixiert ist, wobei das optische Fenster (130) zumindest teilweise in mindestens einer Halterung (158) aufgenommen ist, wobei die Halterung (158) durch mindestens ein an dem Gehäuse (116) gelagertes Federelement (160) gegen die Innenwand (120) der Vakuumzelle (154) gepresst wird.

12. Zelle (110) nach einem der beiden vorhergehenden Ansprüche, wobei die Vakuumzelle (154) zumindest teilweise als transparente Vakuumzelle (154) ausgebildet ist.

13. System (182) zur Durchführung quantenoptischer Messungen an mindestens einer Atomwolke, umfassend mindestens eine Zelle (110) nach einem der vorhergehenden Ansprüche, weiterhin umfassend mindestens eine einstellbare Spannungsquelle (172), wobei die Spannungsquelle (172) mit den Elektroden (118) verbunden ist und wobei mittels der Spannungsquelle (172) das mindestens eine elektrische Feld in dem Innenraum (120) des Gehäuses (116) einstellbar ist.

14. Quantencomputer (204), umfassend mindestens ein System (182) nach einem der vorhergehenden, ein System (182) betreffenden Ansprüche, weiterhin umfassend mindestens eine Steuereinheit (206) zum Adressieren und/oder Auslesen von Quantenbits in einer Atomwolke in dem Innenraum (120).

15. Verfahren zur Durchführung quantenoptischer Messungen an mindestens einer Atomwolke, umfassend die folgenden Schritte:
i. Bereitstellen mindestens eines Systems (182) nach einem der vorhergehenden, ein System (182) betreffenden Ansprüche;
ii. Erzeugen zumindest eines Hochvakuums am Ort der Zelle (110) des Systems (182);
iii. Einbringen mindestens einer Atomwolke in den Innenraum (120) der Zelle (110);
iv. Einstrahlen mindestens eines Lichtstrahls (132) durch das mindestens eine optische Fenster (130) der Zelle (110), so dass der Lichtstrahl (132) mit der Atomwolke in dem Innenraum (120) der Zelle (110) wechselwirkt; und
v. Beaufschlagen der Elektroden (118) der Zelle (110) mit elektrischen Potenzialen und Einstellen eines elektrischen Feldes in dem Innenraum (118) mittels der Elektroden (118).
